# EUROPEAN PATENT APPLICATION

(11) **EP 4 734 015 A1**
(43) Date of publication of application: **29.04.2026**
(21) Application number: 25209570.8
(22) Date of filing: 17.10.2025
(51) Int. Cl.: G06N 10/60

(54) **INFORMATION PROCESSING PROGRAM, INFORMATION PROCESSING METHOD, AND INFORMATION PROCESSING DEVICE**

(30) Priority: 24.10.2024 JP 2024187816
(71) Applicant: FUJITSU LIMITED, Kawasaki-shi, Kanagawa 211-8588 (JP)
(72) Inventor: ASO, Noriyasu, Kawasaki-shi, 211-8588 (JP); KIBUNE, Masaya, Kawasaki-shi, 211-8588 (JP)
(74) Representative: Haseltine Lake Kempner LLP

(57) **Abstract**

An information processing device having a controller configured to: when iterations of updating parameters defining a variational quantum circuit are executed according to a variational quantum eigensolver method, determine for each first parameter, a number of level values settable as a value thereof based on a first degree of contribution of the first parameter to an amount of change in energy corresponding to a quantum state represented by the variational quantum circuit; calculate for each first parameter, a second degree of contribution thereof to the variational quantum eigensolver method, based on the energy in each of two or more patterns representing combinations of level values to be set as the value of the first parameter when setting one of the level values of the number determined for the first parameter; and set, as parameters to be updated, each second parameter that among the first parameters has a relatively high second degree of contribution.

## Description

### FIELD

The embodiments discussed herein are related to an information processing program, an information processing method, and an information processing device.

### BACKGROUND

Conventionally, in fields such as materials development and drug discovery research, variational quantum eigensolver (VQE) has been used as a method for executing quantum chemical calculations to investigate the properties of molecules or atoms under study. VQE executes calculations, for example, by repeating a series of processes until a convergence condition is met, each repetition of the series of processes is called an iteration. In the following description, this calculation may be referred to as a "VQE calculation." An iteration involves, for example, executing a variational quantum circuit, calculating an expectation value of a Hamiltonian based on a quantum state obtained by executing the variational quantum circuit, and updating parameters of the variational quantum circuit to minimize the expectation value of the Hamiltonian.

Prior art, for example, involves recursively deleting gates from a quantum circuit. Furthermore, for example, there is a technique for determining coefficient values used in a process of updating parameter values of a variational quantum circuit to values that periodically change between values higher and lower than a predetermined reference value as the number of updates increases. Furthermore, for example, there is a technique for optimizing parameters of a variational quantum circuit within a cluster while keeping other parameters of variational quantum circuits outside the cluster fixed. Furthermore, there is a technique for updating parameter importance based on information regarding changes in the position of material data points. For example, refer to U.S. Patent Application Publication No. 2021/0133617, International Publication No. WO 2023/243011, U.S. Patent No. 011645442, and Japanese Laid-Open Patent Publication No. 2020-128962.

### SUMMARY

It is an object in one aspect of the embodiments to at least solve the above problems in the conventional technologies.

According to an aspect of an embodiment, a computer-readable recording medium stores therein an information processing program for causing a computer to execute a process, the process including: when a predetermined number of iterations of updating set parameters to be updated among a plurality of parameters defining a variational quantum circuit are executed according to a variational quantum eigensolver method, and each of one or more first parameters among the plurality of parameters has a first degree of contribution to an amount of change in energy corresponding to a quantum state represented by the variational quantum circuit, determining for the each of the one or more first parameters based on the first degree of contribution thereof, a number of level values settable as a value of the each of the one or more first parameters; calculating for the each of the one or more first parameters, a second degree of contribution thereof to the variational quantum eigensolver method, the second degree of contribution being calculated based on a result of calculation of the energy corresponding to the quantum state represented by the variational quantum circuit, in each of two or more patterns each representing a combination of level values to be set as the value of the each of the one or more first parameters values when setting one of the level values of the number determined for the each of the one or more first parameters; and setting, as the parameters to be updated, each of one or more second parameters among the one or more first parameters whose calculated second degree of contribution is determined to be relatively high based on the calculated second degree of contribution.

### BRIEF DESCRIPTION OF DRAWINGS

Fig. 1 is an explanatory diagram depicting one example of an information processing method according to an embodiment.
Fig. 2 is an explanatory diagram depicting an example of an information processing system 200.
Fig. 3 is a block diagram of an example of a hardware configuration of the information processing device 100.
Fig. 4 is a block diagram depicting an example of a hardware configuration of a quantum computing device 201.
Fig. 5 is a block diagram depicting an example of a functional configuration of the information processing device 100.
Fig. 6A is an explanatory diagram depicting an example of operation of the information processing device 100.
Fig. 6B is an explanatory diagram depicting an example of operation of the information processing device 100.
Fig. 7 is an explanatory diagram depicting an example of operation of the information processing device 100.
Fig. 8 is an explanatory diagram depicting an example of operation of the information processing device 100.
Fig. 9 is an explanatory diagram depicting an example of operation of the information processing device 100.
Fig. 10 is an explanatory diagram depicting an example of operation of the information processing device 100.
Fig. 11 is an explanatory diagram depicting an example of operation of the information processing device 100.
Fig. 12 is an explanatory diagram depicting an example of operation of the information processing device 100.
Fig. 13 is an explanatory diagram depicting a specific example of the operation of the information processing device 100.
Fig. 14 is an explanatory diagram depicting a specific example of the operation of the information processing device 100.
Fig. 15 is an explanatory diagram depicting a specific example of the operation of the information processing device 100.
Fig. 16 is an explanatory diagram depicting a specific example of the operation of the information processing device 100.
Fig. 17A is an explanatory diagram depicting a specific example of the operation of the information processing device 100.
Fig. 17B is an explanatory diagram depicting a specific example of the operation of the information processing device 100.
Fig. 18 is an explanatory diagram depicting a specific example of the operation of the information processing device 100.
Fig. 19 is an explanatory diagram depicting a specific example of the operation of the information processing device 100.
Fig. 20 is a flowchart depicting an example of an overall processing procedure.
Fig. 21 is a flowchart depicting an example of the overall processing procedure.
Fig. 22 is a flowchart depicting an example of a procedure of a first review process.
Fig. 23 is a flowchart depicting an example of a procedure of a second review process.

### DESCRIPTION OF EMBODIMENTS

First, problems associated with the conventional techniques are discussed. With the conventional techniques, there is a problem in that the processing time necessary to execute VQE calculations increases. For example, there is a tendency that the greater the number of parameters defining a variational quantum circuit, the longer the processing time necessary for one iteration or the greater the number of iterations necessary, which increases the processing time necessary to execute a VQE calculation.

Embodiments of an information processing program, an information processing method, and an information processing device according to the present disclosure are described in detail with reference to the accompanying drawings.

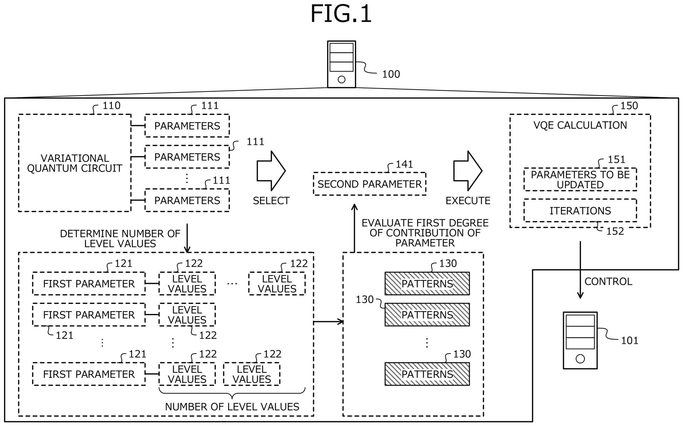

Fig. 1 is an explanatory diagram depicting one example of an information processing method according to an embodiment. An information processing device 100 is a computer configured to execute a VQE calculation. The information processing device 100 is, for example, a server or a personal computer (PC).

A VQE calculation is a series of processes that are repeatedly executed until a convergence condition is satisfied, each repetition being called an iteration. In one iteration, for example, a series of processes is performed, including executing a variational quantum circuit, calculating an expectation value of a Hamiltonian based on a quantum state obtained by executing the variational quantum circuit, and updating the parameters of the variational quantum circuit to minimize the expectation value of the Hamiltonian. The Hamiltonian corresponds to energy. A convergence condition is, for example, that the expectation value of the Hamiltonian is not more than a threshold.

A quantum computer and a classical computer may cooperate to execute a VQE calculation. For example, the quantum computer calculates an expectation value of a Hamiltonian based on a quantum state obtained by executing a variational quantum circuit. On the other hand, for example, the classical computer updates the parameters of the variational quantum circuit. In this case, the quantum computer and the classical computer communicate with each other for each iteration.

Conventionally, there is a problem in that the processing time necessary to execute a VQE calculation increases. For example, as the size of a system that executes the VQE calculation increases, the number of parameters defining the variational quantum circuit tends to increase. The larger the number of parameters defining the variational quantum circuit, the longer the processing time necessary for one iteration and the number of iterations necessary to satisfy the convergence condition tends to increase, resulting in an increase in the processing time necessary to execute the VQE calculation. Furthermore, the larger the number of parameters defining the variational quantum circuit, the greater the number of communications between the quantum computer and the classical computer, resulting in an increase in the processing time necessary to execute the VQE calculation.

For this reason, it is desirable to reduce the processing time necessary for executing a VQE calculation. However, when an attempt is made to reduce the processing time necessary for executing a VQE calculation by reducing the number of parameters defining a variational quantum circuit, the accuracy of the VQE calculation decreases.

To deal with this, for example, a first method may be considered in which, depending on a result of a first iteration, parameters to be set as parameters whose values are to be updated are limited among the multiple parameters defining a variational quantum circuit, and the second and subsequent iterations are executed. For details about this first method, see, for example, International Publication No. WO 2023/144884.

In this first method, parameters to be set as parameters to be updated are limited only depending on the result of the first iteration, so it is possible that parameters useful in the VQE calculation will not be set as parameters to be updated and will be excluded. Therefore, this first method may converge to a local solution, which may reduce the accuracy of the VQE calculation.

Also, for example, a second method is conceivable in which, each time a predetermined number of iterations is executed, a parameter to be set as a parameter whose value is to be updated among multiple parameters defining the variational quantum circuit is reviewed and the iterations are continued. For example, in this second method, multiple level values common to multiple parameters are prepared. For example, in this second method, two or more patterns are prepared, each representing a combination of level values to be set for each parameter when a level value is set for each parameter according to an orthogonal array. For example, in this second method, a parameter to be set as a parameter whose value is to be updated among multiple parameters is reviewed based on the calculation results of a predetermined cost function for each of the two or more prepared patterns.

In this second method, the accuracy of the VQE calculation may be reduced. For example, in the second method, multiple level values common to multiple parameters are prepared, and the degree of contribution of each parameter to the cost function is not taken into consideration, which may result in a reduction in the accuracy of the VQE calculation. For example, in this second method, it is not possible to properly evaluate parameters that are preferably considered by setting a relatively large number of level values. For example, in this second method, increasing the number of prepared level values increases the processing time necessary to execute the VQE calculation.

Thus, in the present embodiment, an information processing method that may reduce the processing time necessary to execute the VQE calculation is described. For example, this information processing method may reduce the processing time necessary to execute the VQE calculation while maintaining the accuracy of the VQE calculation.

In Fig. 1, the information processing device 100 stores a variational quantum circuit 110 related to a VQE calculation 150. The information processing device 100 stores, for example, multiple parameters 111 that define the variational quantum circuit 110. The parameters 111 relate to quantum gates that form the variational quantum circuit 110. The parameters 111 are, for example, the rotation angles of the quantum gates.

The information processing device 100 is configured to control a computing unit 101. The computing unit 101 is configured to execute the variational quantum circuit 110. The computing unit 101 is, for example, an actual quantum computer. The computing unit 101 may also be a quantum simulator that simulates a quantum computer. The quantum simulator, for example, may be implemented outside the information processing device 100. The quantum simulator may, for example, be included in the information processing device 100. The information processing device 100 uses the computing unit 101 to start the VQE calculation 150. For example, the information processing device 100 uses the computing unit 101 to start repeatedly executing iterations 152.

The VQE calculation 150 is executed repeatedly by executing the iterations 152 until a convergence condition is satisfied. In each of the iterations 152, a series of processes that update the set parameters to be updated is performed. The series of processes in the iteration 152, for example, includes executing a variational quantum circuit, calculating an expectation value of a Hamiltonian based on a quantum state obtained by executing the variational quantum circuit, and updating the parameters of the variational quantum circuit to minimize the expectation value of the Hamiltonian. The Hamiltonian corresponds to energy. The convergence condition, for example, is that the expectation value of the Hamiltonian is not more than a threshold. The parameters to be updated are, for example, each of the multiple parameters 111.

When the iteration 152 has been executed a predetermined number of times, the information processing device 100 temporarily suspends the VQE calculation 150, executes the following process (1-1) and the following process (1-2) to reset the parameters to be updated, and then resumes the VQE calculation 150. The predetermined number of times is, for example, set in advance by a user. For example, multiple predetermined times may be set. The predetermined number of times is, for example, ax+b. a is a coefficient, x is an integer, and b is a constant. a is, for example, 5. b is, for example, 1.

(1-1) The information processing device 100 obtains a first degree of contribution of each of one or more first parameters 121 among the multiple parameters 111, the first degree of contribution being the contribution to the amount of change in energy corresponding to the quantum state represented by the variational quantum circuit 110. The first degree of contribution corresponds, for example, to the ratio of the amount of change in energy corresponding to the quantum state represented by the variational quantum circuit to the amount of change in the first parameter. The amount of change in the first parameter is, for example, the difference of the value of the first parameter in the previous execution of the iteration 152 and the value of the first parameter in the current execution of the iteration 152. The amount of change in energy is, for example, the difference of the value of energy in the previous iteration 152 and the value of energy in the current iteration 152. The information processing device 100 obtains the first degree of contribution, for example, by calculating the first degree of contribution.

The information processing device 100 determines, for each first parameter 121, the number of level values 122 that may be set as the value of the first parameter 121 based on the obtained first degree of contribution. The level values 122 are, for example, discrete values that may be set as the value of the first parameter 121. For example, the information processing device 100 determines, based on the obtained first degree of contribution, the number of the level values 122 that may be set as the value of each first parameter 121 such that the greater the first degree of contribution, the greater the number of the level values 122 that may be set as the value of the first parameter 121. This allows the information processing device 100 to prepare a relatively large number of level values 122 for first parameters that are determined to have a large first degree of contribution and are therefore highly important in the VQE calculation 150, thereby enabling detailed consideration of whether to set the first parameter as a parameter to be updated.

(1-2) The information processing device 100 prepares the determined number of level values 122 for each first parameter 121. The information processing device 100 identifies two or more patterns 130 each representing a combination of the level values 122 to be set as the value of each first parameter 121 when setting one of the prepared level values 122 for each first parameter 121. From the perspective of suppressing an increase in processing volume, it is preferable for the information processing device 100 to identify, for example, a portion of the two or more patterns 130 from all patterns 130 representing combinations of the level values 122 to be set as the value of each first parameter 121. For example, the information processing device 100 may identify all patterns 130. For example, the information processing device 100 identifies the two or more patterns 130 by referring to an orthogonal array that limits the combinations of the level values 122 to be set as the value of each first parameter 121 according to the experimental design. This allows the information processing device 100 to identify which patterns 130 should be tested for each first parameter 121 in order to evaluate the contribution thereof to the VQE calculation 150.

The information processing device 100 obtains a calculation result of the energy corresponding to the quantum state represented by the variational quantum circuit 110 for each of the two or more identified patterns 130. The calculation result of the energy corresponds to the calculation result of the cost function. The cost function is a function that returns the expectation value of a Hamiltonian. The information processing device 100, for example, uses the computing unit 101 to obtain a calculation result of the energy corresponding to the quantum state represented by the variational quantum circuit 110 for each pattern 130.

The information processing device 100 calculates a second degree of contribution of each first parameter 121 based on the obtained calculation result, the second degree of contribution being a contribution to the VQE calculation 150. The information processing device 100 evaluates the second degree of contribution by, for example, calculating a correlation coefficient between a dependent variable corresponding to the energy and explanatory variables, respectively, corresponding to the first parameters 121, based on the obtained calculation result. The second degree of contribution is a correlation coefficient. For example, a larger correlation coefficient is considered to indicate a higher second degree of contribution to the VQE calculation 150.

Based on the calculated second degree of contribution, the information processing device 100 selects, from among the one or more first parameters 121, one or more second parameters 141 for which the calculated second degree of contribution is determined to be relatively high. For example, from among the one or more first parameters 121, the information processing device 100 selects one or more second parameters 141 whose calculated second degree of contribution is equal to or greater than a threshold. The information processing device 100 sets each of the selected one or more second parameters 141 as parameters to be updated 151. This allows the information processing device 100 to determine parameters 111 useful in the VQE calculation 150 and enables the parameters 151 whose values are to be updated in the VQE calculation 150 to be set with high accuracy.

As described, the information processing device 100 may narrow down the parameters 111 useful in the VQE calculation 150 and set the parameters 111 as the parameters 151 to be updated. Furthermore, the information processing device 100 may deal with fluctuations in the parameters 111 that are useful in the VQE calculation 150 while the VQE calculation 150 is being executed. Furthermore, when narrowing down the useful parameters 111, the information processing device 100 may adjust the number of the level values 122 that may be set as the value of each parameter and may adjust the level of detail to which the usefulness of each parameter is examined, on a parameter-by-parameter basis. As a result, the information processing device 100 may reduce the processing time necessary to execute the VQE calculation 150 while maintaining the accuracy of the VQE calculation 150. Thus, the information processing device 100 may achieve both accuracy and efficiency in the VQE calculation 150.

Here, while a case where the functions of the information processing device 100 are implemented by a single computer is described, this is not a limitation. For example, the functions of the information processing device 100 may be implemented by cooperation between multiple computers. For example, the functions of the information processing device 100 may be implemented on a cloud.

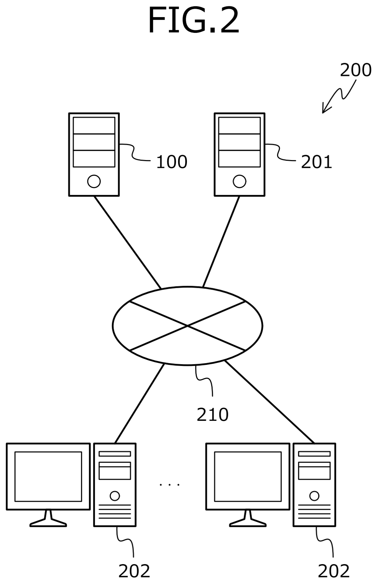

Next, an example of an information processing system 200 to which the information processing device 100 depicted in Fig. 1 is applied will be described with reference to Fig. 2.

Fig. 2 is an explanatory diagram depicting an example of the information processing system 200. In Fig. 2, the information processing system 200 includes the information processing device 100, a quantum computing device 201, and a client device 202.

In the information processing system 200, the information processing device 100 and the quantum computing device 201 are connected via a wired or wireless network 210. The network 210 is, for example, a local area network (LAN), a wide area network (WAN), the Internet, and the like. In the information processing system 200, the information processing device 100 and the client device 202 are connected via the wired or wireless network 210.

The information processing device 100 is a computer that controls the VQE calculation. The information processing device 100 receives a processing request to solve a specified problem. The processing request includes, for example, information that defines the problem. The processing request includes, for example, information that enables identification of a specific variational quantum circuit to be used in the VQE calculation. For example, the processing request includes information that enables identification of multiple parameters that define the specific variational quantum circuit. The information processing device 100 receives the processing request, for example, from the client device 202. The information processing device 100 may also receive the processing request based on, for example, a user's operational input.

In response to the processing request, the information processing device 100 starts the VQE calculation in cooperation with the quantum computing device 201. For example, as depicted in Fig. 1, the information processing device 100 resets the parameters whose values are to be updated when a specific number of iterations have been executed. The specific number of iterations is, for example, set in advance by the user. For example, after a predetermined number of iterations has been executed, the information processing device 100 selects, from among multiple parameters, parameters to be updated and parameters not to be updated, and resets the parameters to be updated. The information processing device 100 outputs the results of the VQE calculation. For example, the information processing device 100 transmits the results of the VQE calculation to the client device 202. For example, the information processing device 100 may output the results of the VQE calculation so that a user may refer to the results. The information processing device 100 is, for example, a server or a PC.

The quantum computing device 201 is a computer that executes requested calculation processing. The quantum computing device 201 is configured to execute quantum computation. The quantum computing device 201 may also be configured to execute classical computation. The quantum computing device 201 executes quantum computation under the control of the information processing device 100. The quantum computing device 201 returns the results of the quantum computation to the information processing device 100. The quantum computing device 201 is, for example, an actual quantum computer. The quantum computing device 201 may be, for example, a classical computer that runs a quantum simulator. The classical computer may be, for example, a server or a PC.

The client device 202 is a computer used by a user who wishes to execute a VQE calculation. The client device 202 generates a processing request requesting the solution of a specified problem based on the user's operational input and transmits the request to the information processing device 100. The client device 202 receives the results of the VQE calculation from the information processing device 100. The client device 202 outputs the results of the VQE calculation so that the user may refer to the results. The client device 202 may be, for example, a PC, a tablet terminal, or a smartphone.

Here, while a case where the information processing device 100 and the quantum computing device 201 are different devices is described, this is not a limitation. For example, the information processing device 100 may have the functionality of the quantum computing device 201 and also operate as the quantum computing device 201. In this case, the information processing system 200 does not need to include the quantum computing device 201.

Furthermore, although the case where the information processing device 100 and the client device 202 are different devices has been described, this is not a limitation. For example, the information processing device 100 may have the functionality of the client device 202 and operate as the client device 202. In this case, the information processing system 200 may omit the client device 202.

The information processing system 200 is applicable to fields such as material development and drug development, for example. For example, the information processing system 200 may be applied to applications in which VQE calculations are executed to solve molecular-related problems.

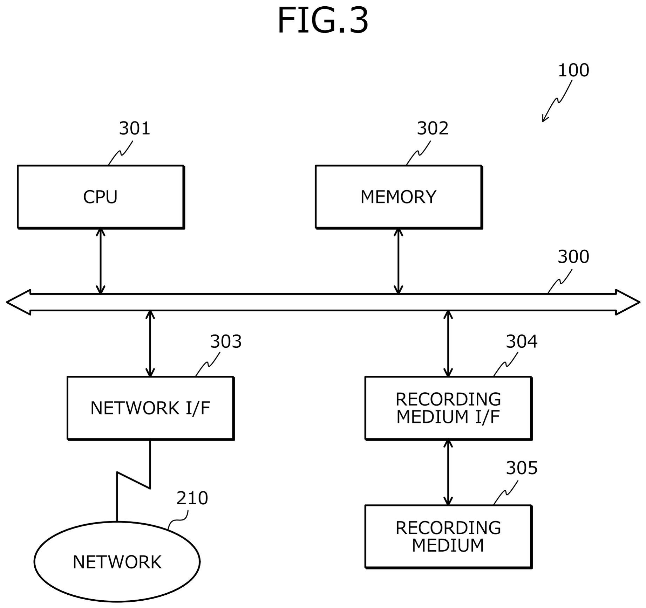

Next, an example of a hardware configuration of the information processing device 100 is described with reference to Fig. 3.

Fig. 3 is a block diagram of an example of a hardware configuration of the information processing device 100. In Fig. 3, the information processing device 100 has a central processing unit (CPU) 301, a memory 302, a network interface (I/F) 303, a recording medium I/F 304, and a recording medium 305. Further, the components are connected to each other by a bus 300.

Here, the CPU 301 governs overall control of the information processing device 100. The memory 302, for example, includes a read-only memory (ROM), a random access memory (RAM), and a flash-ROM. In particular, for example, the flash-ROM and/or ROM store therein various programs and the RAM is used as a work area of the CPU 301. Programs stored to the memory 302 are loaded onto the CPU 301, whereby encoded processes are executed by the CPU 301.

The network I/F 303 is connected to the network 210 via a communications line and is connected to other computers through the network 210. Further, the network I/F 303 administers an internal interface with the network 210 and controls the input and output of data with respect to the other computers. The network I/F 303, for example, is a modem, a LAN adapter, or the like.

The recording medium I/F 304 controls the reading and writing of data with respect to the recording medium 305 under the control of the CPU 301. The recording medium I/F 304 is, for example, a disc drive, a solid-state drive (SSD), a universal serial bus (USB) port, or the like. The recording medium 305 is a nonvolatile memory storing data written thereto under the control of the recording medium I/F 304. The recording medium 305 is, for example, a disc, a semiconductor memory, a USB memory, or the like. The recording medium 305 may be removable from the information processing device 100.

In addition to the components above, the information processing device 100 may include, for example, a keyboard, a mouse, a display, a printer, a scanner, a microphone, a speaker, etc. Further, the information processing device 100 may further have the recording medium I/F 304 and/or the recording medium 305 in plural. The information processing device 100 may omit the recording medium I/F 304 and/or the recording medium 305.

In an instance in which the quantum computing device 201 is a classical computer that starts the quantum simulator, an example of a hardware configuration of the quantum computing device 201, for example, is a same as the example of the hardware configuration of the information processing device 100 depicted in Fig. 3 and thus, description thereof is omitted herein.

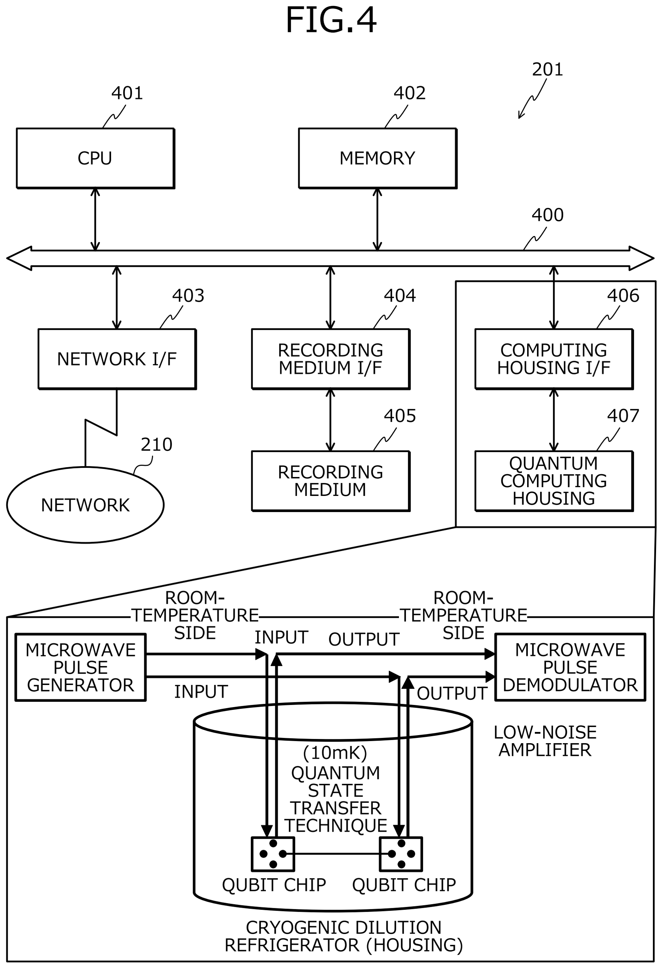

On the other hand, an instance in which the quantum computing device 201 is an actual quantum computer is conceivable. Here, with reference to Fig. 4, an example a hardware configuration of the quantum computing device 201 in an instance in which the quantum computing device 201 is an actual quantum computer is described.

Fig. 4 is a block diagram depicting an example of a hardware configuration of the quantum computing device 201. In Fig. 4, the quantum computing device 201 has a CPU 401, a memory 402, a network I/F 403, a recording medium I/F 404, and a recording medium 405. The quantum computing device 201 further has a computing housing I/F 406 and a quantum computing housing 407. Further, the components are coupled by a bus 400.

Here, the CPU 401 governs overall control of the quantum computing device 201. The memory 402 includes, for example, a ROM, a RAM, and a flash ROM. For example, the flash ROM and the ROM store various programs, and the RAM is used as a work area for the CPU 401. The programs stored in the memory 402 are loaded onto the CPU 401, whereby the CPU 401 executes encoded processes.

The network I/F 403 is coupled to the network 210 through a communications line and is coupled to other computers via the network 210. The network I/F 403 administers an internal interface with the network 210 and controls the input and output of data from other computers. The network I/F 403 is, for example, a modem or a LAN adapter.

The recording medium I/F 404 controls the reading and writing of data with respect to the recording medium 405 under the control of the CPU 401. The recording medium I/F 404 is, for example, a disk drive, an SSD, a USB port, etc. The recording medium 405 is a nonvolatile memory that stores therein data written thereto under the control of the recording medium I/F 404. The recording medium 405 is, for example, a disk, a semiconductor memory, a USB memory, etc. The recording medium 405 may be removable from the quantum computing device 201.

The computing housing I/F 406 controls access to the quantum computing housing 407 under the control of the CPU 401. The computing housing I/F 406 converts signals output from the CPU 401 into input signals for the quantum computing housing 407 using a microwave pulse generator and transmits the converted signals to the quantum computing housing 407. The computing housing I/F 406 converts the signals output from the quantum computing housing 407 into input signals for the CPU 401 using a microwave pulse demodulator and transmits the converted signals to the CPU 401. The quantum computing housing 407 is a computing device equipped with one or more quantum bit chips cooled to an extremely low temperature of 10 mK. Each quantum bit chip represents, for example, a logical quantum bit. The quantum computing housing 407 performs a predetermined computation according to an input signal using one or more quantum bit chips, and outputs an output signal corresponding to the result of performing the predetermined computation.

In addition to the components above, the quantum computing device 201 may have, for example, a keyboard, a mouse, a display, a printer, a scanner, a microphone, a speaker, etc. The computing device 201 may also have the recording medium I/F 404 and recording medium 405 in plural. Further, in the quantum computing device 201, the recording medium I/F 404 and the recording medium 405 may be omitted. Further, the quantum bit chip in the quantum computing housing 407 may be controlled by a method other than microwaves. The quantum bit chip in the quantum computing housing 407 may implement, for example, optical quantum bits.

An example of a hardware configuration example of the client device 202 is, for example, similar to the example of the hardware configuration of the information processing device 100 depicted in Fig. 3 and thus, description thereof is omitted.

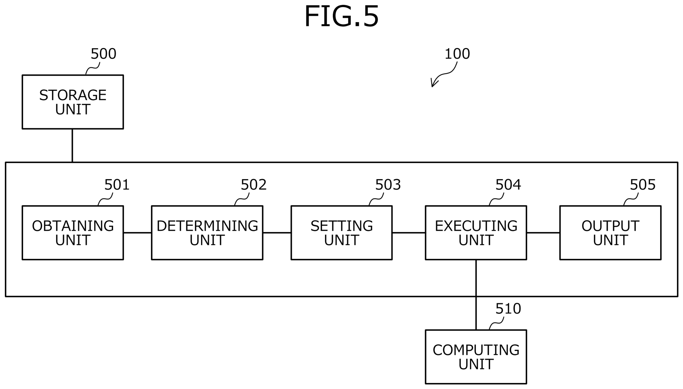

Next, an example of a functional configuration of the information processing device 100 will be described with reference to Fig. 5.

Fig. 5 is a block diagram depicting an example of the functional configuration of the information processing device 100. The information processing device 100 includes a storage unit 500, an obtaining unit 501, a determining unit 502, a setting unit 503, an executing unit 504, and an output unit 505.

The information processing device 100 may use a computing unit 510. The computing unit 510 exists, for example, outside the information processing device 100. The computing unit 510 may also exist, for example, inside the information processing device 100. The computing unit 510 is, for example, the quantum computing device 201.

The storage unit 500 is implemented by, for example, a storage area such as the memory 302 or the recording medium 305 depicted in Fig. 3. Herein, while a case where the storage unit 500 is included in the information processing device 100 will be described, this is not a limitation. For example, the storage unit 500 may be included in a device different from the information processing device 100, and the contents stored in the storage unit 500 may be accessible from the information processing device 100.

The obtaining unit 501 to the output unit 505 function as an example of a controller. For example, functions of the obtaining unit 501 to the output unit 505 are implemented by, for example, causing the CPU 301 to execute a program stored in a storage area such as the memory 302 or the recording medium 305 depicted in Fig. 3, or by the network I/F 303. The processing results of each functional unit are to a storage area such as the memory 302 or the recording medium 305 depicted in Fig. 3.

The storage unit 500 stores various pieces of information that are referenced or updated during processes by each functional unit. The storage unit 500 stores, for example, circuit information that defines a variational quantum circuit used in VQE calculations. The circuit information includes, for example, information that identifies multiple parameters that define the variational quantum circuit. The parameters relate to quantum gates that form the variational quantum circuit. The parameters are, for example, rotation angles of the quantum gates. The parameters may take on, for example, any of multiple discrete values. The circuit information is obtained, for example, by the obtaining unit 501. The circuit information may be set in advance by, for example, a user.

The storage unit 500 stores, for example, the number of level values that may be set as the value of each of one or more first parameters among the multiple parameters. The level values are, for example, discrete values that may be set as the value of the first parameter. The number is determined, for example, by the determining unit 502.

The storage unit 500 stores, for example, level values that may be set as the value of one or more first parameters among the multiple parameters. The level values are set, for example, by the determining unit 502. For example, a level value is ((maximum value-minimum value)/(m-1))×i+minimum value. The maximum value is the maximum value that may be set as the value of the first parameter. The minimum value is the minimum value that may be set as the value of the first parameter. m is the number of level values. i is an index of the level values. i is 1, 2, ..., m.

The storage unit 500 stores, for example, an orthogonal array that limits how to combine level values to be set as the value of one or more first parameters among the multiple parameters. The orthogonal array is information defined, for example, according to experimental design. The orthogonal array is generated, for example, by the setting unit 503.

The obtaining unit 501 obtains various pieces of information used in the processes of the functional units. The obtaining unit 501 stores the obtained various pieces of information to the storage unit 500 or outputs the obtained information to the functional units. The obtaining unit 501 may also output various pieces of information stored in the storage unit 500 to the functional units. The obtaining unit 501 obtains the various pieces of information based on, for example, a user's operational input. The obtaining unit 501 may also receive the various pieces of information from, for example, a device other than the information processing device 100.

The obtaining unit 501 obtains, for example, a processing request requesting that a VQE calculation be executed to solve a specified problem. The processing request may include, for example, circuit information that specifies a variational quantum circuit to be used in the VQE calculation. For example, the obtaining unit 501 obtains the processing request by receiving an input of the processing request. For example, the obtaining unit 501 may obtain the processing request by receiving a processing request from another computer. The other computer may be, for example, the client device 202.

The obtaining unit 501 obtains, for example, circuit information that defines a variational quantum circuit to be used in the VQE calculation. For example, the obtaining unit 501 obtains the circuit information by extracting the circuit information from the processing request. For example, the obtaining unit 501 may obtain the circuit information by receiving input of the circuit information. For example, the obtaining unit 501 may obtain the circuit information by receiving the circuit information from another computer. The other computer is, for example, the client device 202.

The obtaining unit 501 may receive a start trigger that starts a process by one of the functional units. The start trigger may be, for example, a predetermined operation input by a user. The start trigger may be, for example, reception of predetermined information from another computer. The start trigger may be, for example, output of predetermined information by one of the functional units. For example, the obtaining unit 501 regards the receipt of a processing request as a start trigger that starts processes by the determining unit 502, the setting unit 503, and the executing unit 504.

The executing unit 504 repeatedly executes (executes iterations of) updating set parameters to be updated among multiple parameters that define the variational quantum circuit according to VQE until a termination condition is met. The iteration, for example, involves executing the variational quantum circuit, calculating the expectation value of a Hamiltonian based on the quantum state obtained by executing the variational quantum circuit, and updating the parameters of the variational quantum circuit so as to minimize the expectation value of the Hamiltonian. The update, for example, involves changing the value of a parameter.

When the series of processes to be iterated is executed the first time, the parameter to be updated is, for example, each of the multiple parameters. When the series of processes to be iterated is executed the first time, the parameter to be updated may be, for example, one or more parameters randomly selected from the multiple parameters. The executing unit 504 executes the iteration, for example, by having the computing unit execute a variational quantum circuit. The computing unit is configured to execute a variational quantum circuit. This allows the executing unit 504 to execute the VQE calculation.

The executing unit 504 may temporarily suspend the VQE calculation when a predetermined number of iterations have been executed. For example, multiple predetermined numbers may be set. The predetermined numbers may be, for example, a first number and a second number. The second number is greater than the first number. The second number may be plural, that is, multiple second numbers may be set. When the VQE calculation is temporarily suspended, the information processing device 100 resets the parameters to be updated using the determining unit 502 and the setting unit 503, as described below. The executing unit 504 resumes the VQE calculation in response to the resetting of the parameters to be updated. This allows the executing unit 504 to reduce the processing time necessary to execute the VQE calculation while maintaining the accuracy of the VQE calculation.

The determining unit 502 selects one or more first parameters from the multiple parameters when a predetermined number of iterations have been executed. The determining unit 502, for example, selects each parameter of the multiple parameters as the first parameter. The determining unit 502 may, for example, select a parameter other than the parameter to be updated from the multiple parameters as the first parameter.

For example, the determining unit 502 may select a parameter other than the parameter to be updated from the multiple parameters as the first parameter each time a predetermined number of iterations have been executed. For example, the determining unit 502 may select each parameter of the multiple parameters as the first parameter when the first number of iterations have been executed. For example, the determining unit 502 may select each parameter of the multiple parameters as the first parameter when the second number of iterations have been executed. For example, the determining unit 502 may select a parameter other than a parameter to be updated of the multiple parameters as the first parameter when the second number of iterations have been executed.

The determining unit 502 obtains for each of the one or more selected first parameters, a first degree of contribution thereof to the amount of change in energy corresponding to the quantum state represented by the variational quantum circuit. The first degree of contribution corresponds to a ratio of the amount of change in energy corresponding to the quantum state represented by the variational quantum circuit to the amount of change in the first parameter. The determining unit 502 obtains the first degree of contribution, for example, by calculating the first degree of contribution.

The determining unit 502 determines, for each first parameter, the number of level values that may be set as the value of the first parameter based on the obtained first degree of contribution. The determining unit 502 determines, for example, based on the first degree of contribution of each first parameter, the number of level values that may be set as the value of the first parameter such that the larger the first degree of contribution, the greater the number of level values that may be set as the value of the first parameter. For example, the determining unit 502 determines the number of level values that may be set as the value of each first parameter each time a predetermined number of iterations are executed, such that the greater the degree of first degree of contribution, the greater the number of level values that may be set as the value of the first parameter.

For example, when the first number of iterations are executed, the determining unit 502 may determine the number of level values that may be set as the value of each first parameter such that the greater the degree of first degree of contribution, the greater the number of level values that may be set as the value of the first parameter. For example, when the second number of iterations are executed, the determining unit 502 determines the number of level values that may be set as the value of each first parameter such that the number of level values for the first parameter that is the parameter to be updated is smaller than for parameters other than the parameter to be updated. At this time, for example, the determining unit 502 may further determine the number of level values that may be set as the value of each first parameter based on the first degree of contribution of each first parameter.

The determining unit 502 associates and sets level values of the determined number with the first parameters . For example, the determining unit 502 associates and sets level values of the determined number ((maximum value-minimum value)/(m-1))×i+minimum value with the first parameters, respectively. This allows the determining unit 502 to prepare a relatively large number of level values for first parameters that are determined to have a large first degree of contribution and important in the VQE calculation, making it possible to consider in detail whether to set the level values as parameters to be updated.

The setting unit 503 identifies two or more patterns each representing a combination of level values to be set as a value of each first parameter. A level value to be set as the value of a first parameter is one of the level values of the determined number. The setting unit 503 obtains or generates an orthogonal array that limits the combination of level values to be set as the values of the first parameters, for example, according to an experimental design method. The setting unit 503, for example, refers to an orthogonal array to identify two or more patterns among all patterns representing combinations of level values to be set as values of the first parameters. This allows the setting unit 503 to identify which patterns are to be tested to evaluate the degree of contribution of each first parameter to the VQE calculation. Therefore, the setting unit 503 may appropriately select the patterns to be tested, eliminating the need to comprehensively test all patterns representing combinations of level values to be set as values of the first parameters. The setting unit 503 may efficiently evaluate the degree of contribution of each first parameter to the VQE calculation, thereby reducing the amount of processing.

The setting unit 503 obtains the second degree of contribution of each first parameter to the variational quantum eigensolver method based on the calculation results of the energy corresponding to the quantum state represented by the variational quantum circuit for each of the two or more identified patterns. The setting unit 503 obtains the second degree of contribution, for example, by calculating the second degree of contribution.

For example, the setting unit 503 obtains a calculation result of the energy corresponding to the quantum state represented by the variational quantum circuit for each of the two or more patterns. For example, based on the obtained calculation result, the setting unit 503 calculates a second degree of contribution of the first parameter from a correlation coefficient between a dependent variable corresponding to the energy and an explanatory variable corresponding to each first parameter. The second degree of contribution is, for example, the correlation coefficient itself.

For example, the setting unit 503 obtains a calculation result of the energy corresponding to the quantum state represented by the variational quantum circuit for each of the two or more patterns. For example, based on the obtained calculation result, the setting unit 503 identifies a regression model including a dependent variable corresponding to the energy, explanatory variables corresponding to each first parameter, and coefficients of the explanatory variables. The setting unit 503 calculates a second degree of contribution of the first parameter from a coefficient of the explanatory variables, respectively, corresponding to the first parameters in the identified regression model. The second degree of contribution is, for example, the coefficient itself.

Based on the obtained second degree of contribution, the setting unit 503 sets, as parameters to be updated, each of the one or more second parameters, among the one or more first parameters, whose calculated second degree of contribution is determined to be relatively high. This allows the setting unit 503 to determine which parameters are useful in the VQE calculation and appropriately set parameters whose values are to be updated in the VQE calculation.

Based on the obtained second degree of contribution, the setting unit 503 may also remove, from the parameters to be updated, each of one or more third parameters, among the one or more first parameters, that are currently set as parameters to be updated and whose obtained second degree of contribution is determined to be relatively low. This allows the setting unit 503 to determine which parameters are useful in the VQE calculation and appropriately set parameters whose values are to be updated in the VQE calculation.

The output unit 505 outputs the processing results of at least one of the functional units. The output format may be, for example, display on a display, printout on a printer, transmission to an external device via the network I/F 303, or storage to a storage area such as the memory 302 or the recording medium 305. This allows the output unit 505 to notify the user of the processing results of at least one of the functional units, thereby improving the convenience of the information processing device 100.

The output unit 505, for example, outputs the results of the VQE calculation executed by the executing unit 504. The output unit 505, for example, transmits the results of the VQE calculation to another computer. The other computer may be, for example, the client device 202. The output unit 505 may, for example, output the results of the VQE calculation so that the user may refer to the results.

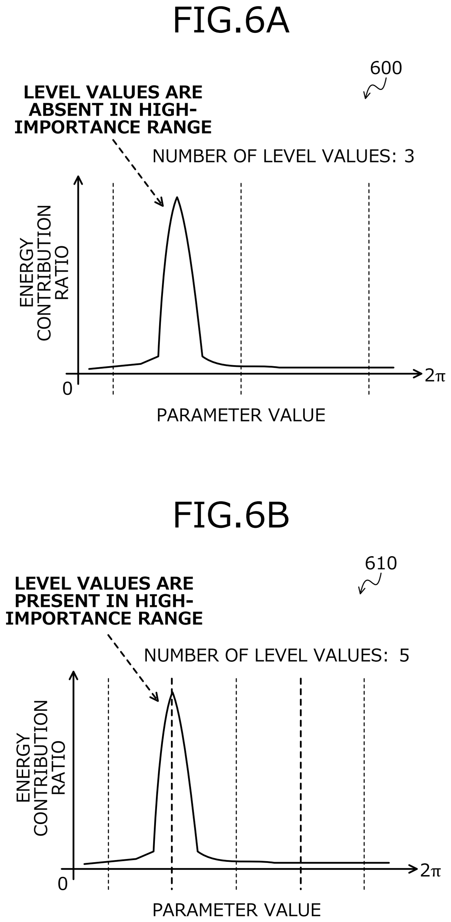

Next, an example of the operation of the information processing device 100 will be described with reference to Figs. 6 to 12.

Figs. 6A, 6B, 7, 8, 9, 10, 11, and 12 are explanatory diagrams depicting an example of operation of the information processing device 100. In Figs. 6 to 12, the information processing device 100 selects useful parameters for the VQE calculation and limits the parameters whose values are to be updated in order to reduce the processing time necessary for executing the VQE calculation while maintaining the accuracy of the VQE calculation.

Here, when selecting useful parameters for the VQE calculation, the information processing device 100 evaluates for each of one or more parameters, the first degree of contribution thereof to the amount of change in energy. The first degree of contribution is, for example, the ratio of the amount of change in energy to the amount of change in the parameter. The first degree of contribution corresponds to the energy contribution rate. The information processing device 100 accurately evaluates the difference in importance between parameters based on the evaluated first degree of contribution and adjusts the number of level values that may be set as the value of each parameter.

Furthermore, when selecting useful parameters for the VQE calculation, the information processing device 100 evaluates for each of one or more parameters, the second degree of contribution thereof to the VQE calculation based on an orthogonal array according to the experimental design. The orthogonal array, for example, limits the combination of an adjusted number of level values to be set as the value of each parameter.

The information processing device 100, for example, identifies two or more patterns representing combinations of level values to be set as the values of one or more parameters based on the orthogonal array according to experimental design. Here, the information processing device 100 may accurately determine which patterns representing combinations of level values to be set as the values of the parameters are preferable to test. The information processing device 100, for example, tests each of the two or more identified patterns to calculate a cost function and efficiently evaluates the second degree of contribution of the parameters to the VQE calculation.

The information processing device 100 may appropriately select and discard parameters useful in the VQE calculation based on the evaluated second degree of contribution. An example of the operation of the information processing device 100 will be described in detail below with reference to Figs. 6A to 12. First, we move on to the description of Figs. 6A and 6B.

In Figs. 6A and 6B, the information processing device 100 identifies x parameters that define a variational quantum circuit. Here, x=12. The 12 parameters are, for example, θᵢ, where i=1, 2, ..., 12. The information processing device 100 sets an initial value for each parameter θᵢ. The information processing device 100 sets each parameter θᵢ as a parameter whose value is to be updated. The information processing device 100 starts the VQE calculation using the quantum computing device 201.

For example, in the VQE calculation, the information processing device 100 reviews the iterations and selects parameters θᵢ that are useful in the VQE calculation, and resets the parameters to be updated each time the iteration is executed. The number of revisions is, for example, (nk+1). n is an integer greater than or equal to 0. k is a coefficient. k represents the "revision count," which corresponds to the number of times the parameter to be updated is reconfigured. k is, for example, 5.

The information processing device 100 interrupts the VQE calculation when iterations have been executed (5×0+1)=1 times, selects parameters useful in the VQE calculation, and reconfigures the parameter to be updated. First, the information processing device 100 sets, for example, each parameter θᵢ as a candidate parameter to be set as the parameter to be updated.

The information processing device 100 evaluates the influence on the cost function representing energy, for example, using the first degree of contribution representing the ratio of the amount of change in energy to the amount of change in each parameter θᵢ set as a candidate parameter. The energy corresponds to the quantum state represented by the variational quantum circuit. For example, the information processing device 100 calculates for each parameter θᵢ set as a candidate parameter, the first degree of contribution representing the ratio of the amount of change in energy to the amount of change in the parameter θᵢ. The first degree of contribution is, for example, ΔE/Δθᵢ.

ΔE is, for example, the difference of the energy in the current iteration and the energy in the previous iteration. When the current iteration is the first, ΔE may be, for example, the difference of the energy in the current iteration and the energy corresponding to the initial value of each parameter θᵢ.

AOᵢ is, for example, the difference of the value of the parameter θᵢ in the current iteration and the value of the parameter θᵢ in the previous iteration. When the current iteration is the first, AGᵢ may be, for example, the difference of the value of the parameter θᵢ in the current iteration and the initial value of the parameter θᵢ.

The information processing device 100 adjusts, for example, the number of level values that may be set as the value of each parameter θᵢ set for the candidate parameters based on the calculated first degree of contribution. Here, it is considered preferable to increase the number of level values that may be set as the value of the parameter θᵢ as the first degree of contribution increases. For example, Graphs 600 and 610 depict the values of the parameter θᵢ having a range with a relatively large contribution rate to energy, and the degree of contribution rate to energy.

Here, suppose the number of level values that may be set as the value of the parameter θᵢ is three. The dotted lines in Graph 600 indicate the respective level values when the number of level values is three. As depicted in Graph 600, when the number of level values is three, there is no level value that falls within a range with a relatively high importance and a relatively large contribution rate to energy. Therefore, regardless of which level value is set as the value of parameter θᵢ, there is a problem in that it is not possible to take into account a range with a relatively high importance and a relatively large contribution rate to energy.

On the other hand, suppose the number of level values that may be set as the value of parameter θᵢ is five. The dotted lines on Graph 610 indicate the respective level values when the number of level values is five. As depicted in Graph 610, when the number of level values is five, there is a level value that falls within a range with a relatively high importance and a relatively large contribution rate to energy. Therefore, by setting each level value as the value of parameter θᵢ, it is possible to consider a value range with a relatively high importance and a relatively large contribution rate to energy.

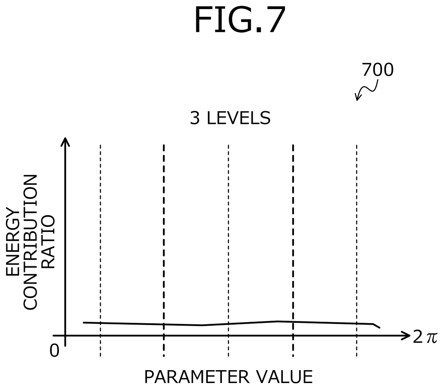

Furthermore, when the first degree of contribution is relatively small, it is preferable to reduce the number of level values that may be set as the value of the parameter θᵢ and thereby reduce the amount of processing. Here, description is given with reference to Fig. 7. In Fig. 7, for example, Graph 700 depicts the value of the parameter θᵢ that does not have a value range with a relatively large contribution rate to energy, and the degree of contribution rate to energy.

Here, assume that the number of level values that may be set as the value of parameter θᵢ is three. The dotted lines in Graph 700 indicate the respective level values when the number of level values is three. As depicted in Graph 700, because it is not necessary to consider a value range with a relatively high importance and a relatively large contribution rate to energy, it is considered that even when the number of level values is relatively small, an adverse effect on the VQE calculation is relatively small.

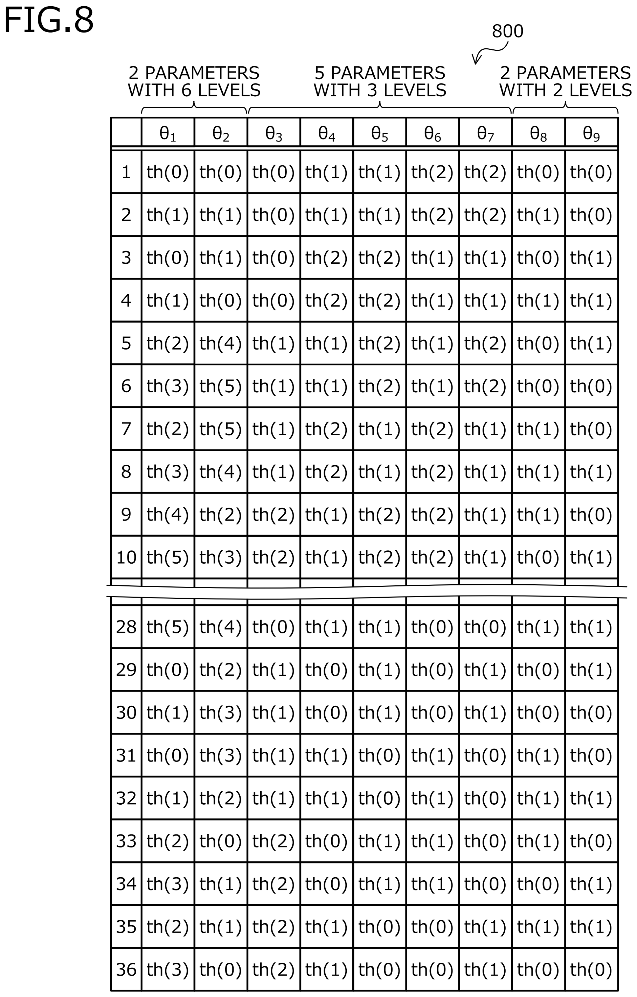

Thus, the information processing device 100 determines the number of level values that may be set as the value of each parameter θᵢ such that the greater the degree of first degree of contribution, the greater the number of level values. The information processing device 100, for example, determines the number of level values that may be set as the value of each parameter θᵢ by referring to a table that associates a ranking of the degree of first degree of contribution with the number of level values, which increases as the ranking increases. Here, description is given with reference to Fig. 8.

In Fig. 8, the information processing device 100 generates an orthogonal array that limits the combinations of level values to be set as the value of each parameter θᵢ (i=1 to 12) set as candidate parameters, for example, according to experimental design. Table 800 depicted in Fig. 8 is an example of an orthogonal array. Table 800 is, for example, an example of an orthogonal array that limits the combinations of level values to be set as the values of parameter θᵢ (i=1 to 9). The leftmost column of Table 800 indicates the index of the combination.

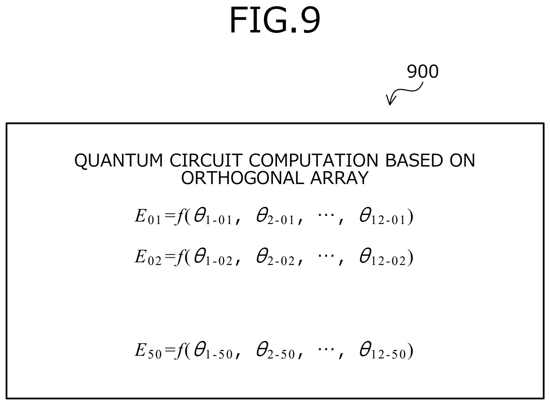

In Table 800, th(x) indicates the x-th level value. In Table 800, the number of level values that may be set as the values of parameters θ₁ and θ₂ is 6. In Table 800, the number of level values that may be set as the values of parameters θ₃, θ₄, θ₅, θ₆, and θ₇ is 3. In Table 800, the number of level values that may be set as the values of parameters θ₈ and θ₉ is 2. Here, description is given with reference to Fig. 9.

In Fig. 9, the information processing device 100 identifies two or more patterns that respectively represent combinations of level values to be set as the value of each parameter θᵢ when setting one of the determined number of level values for each parameter θᵢ. The information processing device 100 identifies, for example, two or more patterns from among all patterns that represent combinations of level values to be set as the value of each parameter θᵢ set for the candidate parameters, according to the generated orthogonal array.

For example, the information processing device 100 identifies 50 patterns representing combinations of level values to be set as the values of parameters θ₁, θ₂, θ₃, θ₄, θ₅, θ₆, θ₇, θ₈, θ₉, θ₁₀, θ₁₁, and θ₁₂ based on an orthogonal array. This allows the information processing device 100 to identify which patterns are preferably tested for energy calculation using a predetermined cost function. If the information processing device 100 were to calculate energy for all patterns using the cost function, this could result in an increase in processing volume. Therefore, it is considered preferable for the information processing device 100 to reduce the processing volume by calculating energy for two or more selected patterns using the cost function according to the orthogonal array.

The information processing device 100 calculates energy for each of the two or more identified patterns using the cost function. In the example depicted in Fig. 9, the information processing device 100 uses the quantum computing device 201 to execute quantum computation using a predetermined cost function for each of the 50 identified patterns, as depicted in Table 900, to calculate energy Eⱼ. Here, Eⱼ represents the energy value calculated for the j-th pattern. θⱼ₋ₖ represents a level value set as the value of the k-th parameter θₖ for the j-th pattern.

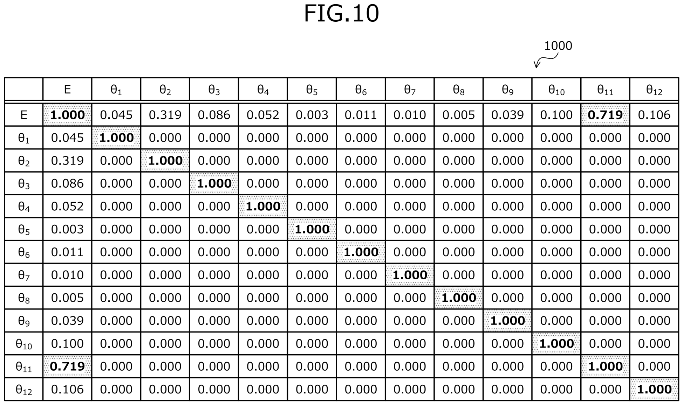

Based on Eⱼ and θⱼ₋ₖ depicted in Table 900, the information processing device 100 searches for and selects parameters that have a relatively large effect on energy and a relatively large contribution rate to the VQE calculation as parameters useful in the VQE calculation. Here, description is given with reference to Fig. 10, which describes an example of the information processing device 100 searching for parameters useful in the VQE calculation.

In Fig. 10, the information processing device 100 calculates a correlation coefficient between a dependent variable corresponding to the energy and the explanatory variable corresponding to the parameter based on Eⱼ and θⱼ₋ₖ, as depicted in Table 1000. The information processing device 100 selects, from among the candidate parameters, parameters whose correlation coefficients are equal to or greater than the first threshold of 0.7 as parameters that have a relatively large effect on energy and are useful in VQE calculations. In the example depicted in Fig. 10, the correlation coefficient for θ₁₁ is equal to or greater than the first threshold of 0.7. This allows the information processing device 100 to narrow down parameters that are useful in VQE calculations and that are to be preferably set as parameters whose values are to be updated.

Furthermore, the information processing device 100 may select parameters useful in VQE calculations based on Eⱼ and θⱼ₋ₖ using a regression model including dependent variables corresponding to energy, explanatory variables corresponding to the parameters, and coefficients of the explanatory variables. The regression model is, for example, E=Σₖ=₁ⁿaₖθₖ. E is the dependent variables. θₖ is the explanatory variable. aₖ is a coefficient of θₖ In this case, the information processing device 100 selects, from among the candidate parameters, parameters whose absolute values of aₖ are equal to or greater than a second threshold as parameters that have a relatively large effect on energy and are useful in VQE calculations. The second threshold may, for example, refer to the absolute values of aₖ that are among the largest.

Furthermore, the information processing device 100 may sometimes use both a correlation coefficient and a regression model to select parameters that are useful in VQE calculations. In this case, the information processing device 100 selects, from among the candidate parameters, parameters whose correlation coefficients are equal to or greater than a first threshold of 0.7 as parameters that are useful in VQE calculations. Furthermore, the information processing device 100 selects, from among the candidate parameters, parameters whose absolute value of aₖ is equal to or greater than a second threshold as useful parameters for the VQE calculation.

Alternatively, the information processing device 100 may select, for example, from among the candidate parameters, parameters whose correlation coefficient is equal to or greater than a first threshold and whose absolute value of aₖ is equal to or greater than a second threshold, as useful parameters for the VQE calculation. The information processing device 100 sets a set of selected useful parameters to a parameter group θ selection. The information processing device 100 selects parameters other than the useful parameters and sets the set of parameters other than the useful parameters to a parameter group θ exclusion.

The information processing device 100 resets the parameters to be updated so that each parameter θᵢ in the selected parameter group θ selection remains as a parameter to be updated and each parameter θᵢ in the selected parameter group θ exclusion is excluded from the parameters to be updated. After resetting the parameters to be updated, the information processing device 100 resumes the VQE calculation.

Each time the information processing device 100 executes (5×k+1)(k≥1) iterations, the information processing device 100 again interrupts the VQE calculation, selects parameters useful in the VQE calculation, and resets the parameters to be updated. First, the information processing device 100, for example, sets each parameter θᵢ of the x parameters {θᵢ} as a candidate parameter to be set as the parameter to be updated. Here, the information processing device 100 may, for example, set each parameter θᵢ of the parameter group θ exclusion as a candidate parameter to be set as the parameter to be updated.

The information processing device 100 evaluates the influence on the cost function representing energy, for example, using a first degree of contribution representing the ratio of the amount of change in energy to the amount of change in each parameter θᵢ set as a candidate parameter. For example, the information processing device 100 calculates the first degree of contribution representing the ratio of the amount of change in energy to the amount of change in each parameter θᵢ set as a candidate parameter.

The information processing device 100 adjusts the number of level values that may be set as the value of each parameter θᵢ set as a candidate parameter, for example, based on the calculated first degree of contribution. Here, since each parameter θᵢ in the previous parameter group θ selection has already been found to be relatively important, it is considered preferable to reduce the number of level values that may be set as the value of the parameter θᵢ, thereby reducing the amount of processing. For each parameter θᵢ in the previous parameter group θ selection, even when the number of level values is relatively small, it is considered that the adverse effect on the VQE calculation is relatively small.

Accordingly, it is considered that the number of level values for each parameter θᵢ in the previous parameter group θ selection may be smaller than that for each parameter θᵢ in the previous parameter group θ exclusion (removal). For this reason, the information processing device 100 determines a relatively small number of level values for each parameter θᵢ in the previous parameter group θ selection.

At this time, the information processing device 100 may determine the number of level values that may be set as the value of each parameter θᵢ such that the greater the first degree of contribution of the parameter group θ in the previous parameter group θ selection, the greater the number of level values. Furthermore, the information processing device 100 may determine the number of level values that may be set as the value of each parameter θᵢ in the previous parameter group θ exclusion (removal) such that the greater the first degree of contribution of the parameter group θ, the greater the number of level values.

The information processing device 100 generates an orthogonal array that limits the combinations of level values to be set as the value of each parameter θᵢ set for the candidate parameters according to an experimental design method. The information processing device 100 identifies two or more patterns from among all patterns representing combinations of level values to be set as the value of each parameter θᵢ set for the candidate parameters according to the generated orthogonal array. The information processing device 100 calculates energy Eⱼ for each of the identified two or more patterns using a cost function. Here, Eⱼ indicates the energy value calculated for the j-th pattern.

Based on Eⱼ and θⱼ₋ₖ, the information processing device 100 searches for and selects parameters that have a relatively large effect on energy and a relatively large contribution rate to VQE calculation as parameters useful in VQE calculation. Here, θⱼ₋ₖ indicates a level value set as the value of the k-th parameter θₖ in the j-th pattern. Based on Eⱼ and θⱼ₋ₖ, for example, the information processing device 100 calculates a correlation coefficient between a dependent variable corresponding to energy and an explanatory variable corresponding to the parameter. Among the candidate parameters, the information processing device 100 selects parameters whose correlation coefficient is equal to or greater than a first threshold value of 0.7 as parameters that have a relatively large effect on energy and are useful in VQE calculation.

Based on Eⱼ and θⱼ₋ₖ, the information processing device 100 may also select parameters useful in VQE calculation using a regression model including a dependent variables corresponding to energy, an explanatory variable corresponding to the parameter, and a coefficient of the explanatory variable. The regression model is, for example, E=Σₖ₌₁ⁿaₖθₖ. E is the dependent variable. θₖ is an explanatory variable. aₖ is a coefficient of θₖ. In this case, the information processing device 100 selects, from among the candidate parameters, parameters whose absolute values of aₖ are equal to or greater than a second threshold as parameters that have a relatively large effect on energy and are useful in VQE calculations. The second threshold may, for example, refer to the absolute value of aₖ that is among the largest absolute values of aₖ.

Furthermore, the information processing device 100 may use both a correlation coefficient and a regression model to select parameters that are useful in VQE calculations. In this case, the information processing device 100 selects, from among the candidate parameters, parameters whose correlation coefficients are equal to or greater than a first threshold of 0.7 as parameters that are useful in VQE calculations. Furthermore, the information processing device 100 selects, from among the candidate parameters, parameters whose absolute values of aₖ are equal to or greater than a second threshold as parameters that are useful in VQE calculations.

Furthermore, the information processing device 100 may select, for example, from among the candidate parameters, parameters whose correlation coefficient is equal to or greater than a first threshold and whose absolute value of aₖ is equal to or greater than a second threshold as useful parameters for the VQE calculation. The information processing device 100 sets a set of selected useful parameters to a parameter group θ selection. The information processing device 100 selects parameters other than the useful ones and sets the set of parameters other than the useful ones to a parameter group θ exclusion.

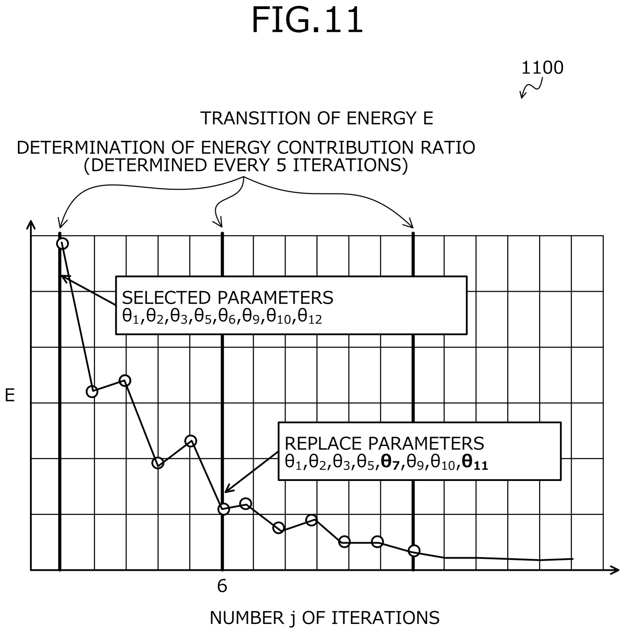

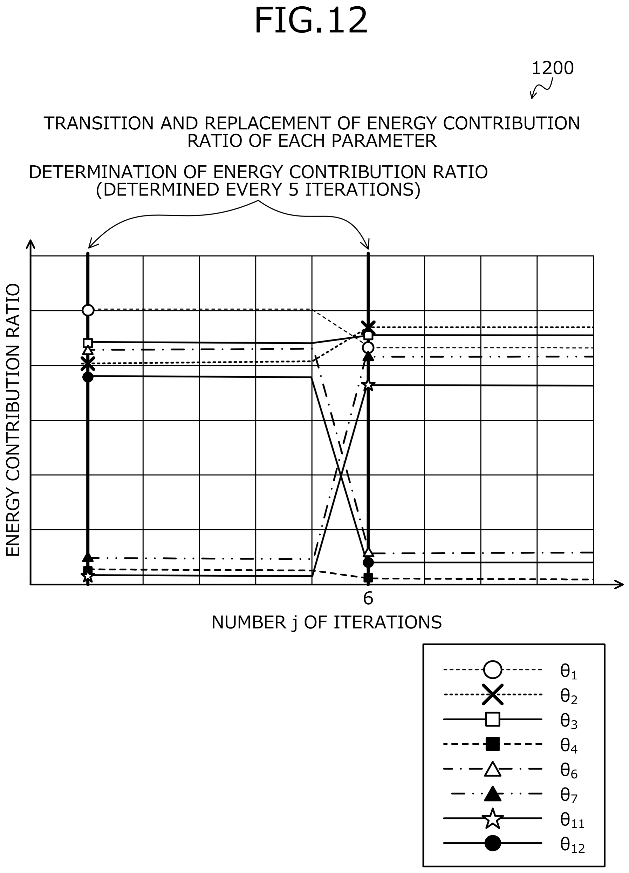

The information processing device 100 resets the parameters to be updated so that each parameter θᵢ in the currently selected parameter group θ selection remains as a parameter to be updated and each parameter θᵢ in the currently selected parameter group θ exclusion is excluded from the parameters to be updated. After resetting the parameters to be updated, the information processing device 100 resumes the VQE calculation. When the convergence condition is satisfied, the information processing device 100 completes the VQE calculation. Here, description is given with reference to Figs. 11 and 12.

Graph 1100 depicted in Fig. 11 depicts the relationship between the number j of iterations and energy E. As depicted in Graph 1100, the information processing device 100 resets the parameters to be updated each time iteration is executed (5×k+1). For example, after one iteration, the information processing device 100 resets the parameters to be updated to θ₁, θ₂, θ₃, θ₅, θ₆, θ₉, θ₁₀, and θ₁₂. For example, after six iterations, the information processing device 100 resets the parameters to be updated to θ₁, θ₂, θ₃, θ₅, θ₇, θ₉, θ₁₀, and θ₁₁. The information processing device 100 may then minimize the energy E.

Graph 1200 depicted in Fig. 12 depicts the relationship between the number j of iterations and the energy contribution rate. As depicted in Graph 1200, the information processing device 100 may, for example, reset the parameter θᵢ with a relatively high energy contribution rate as the parameter to be updated each time (5×k+1) iterations are executed, depending on the change in the energy contribution rate. This allows the information processing device 100 to narrow down parameters useful in the VQE calculation and set the parameters as the parameters to be updated, thereby reducing the processing time necessary for executing the VQE calculation while maintaining the accuracy of the VQE calculation.

Furthermore, the information processing device 100 may temporarily suspend the VQE calculation, update the parameter group θ selection, and update the parameters to be updated each time the number of iterations executed reaches a review count. This allows the information processing device 100 to deal with fluctuations in parameters useful in the VQE calculation during the VQE calculation, thereby reducing the processing time necessary for executing the VQE calculation while maintaining the accuracy of the VQE calculation.

Furthermore, for example, when updating a parameter to be updated, the information processing device 100 may appropriately adjust the number of level values that may be set as the value of each parameter, depending on the energy contribution rate. Therefore, the information processing device 100 may identify an appropriate pattern to test for calculating energy while controlling the degree of detail to which the desirability of each parameter is examined, depending on the importance of each parameter. Therefore, the information processing device 100 may reduce the processing time necessary to execute the VQE calculation while maintaining the accuracy of the VQE calculation.

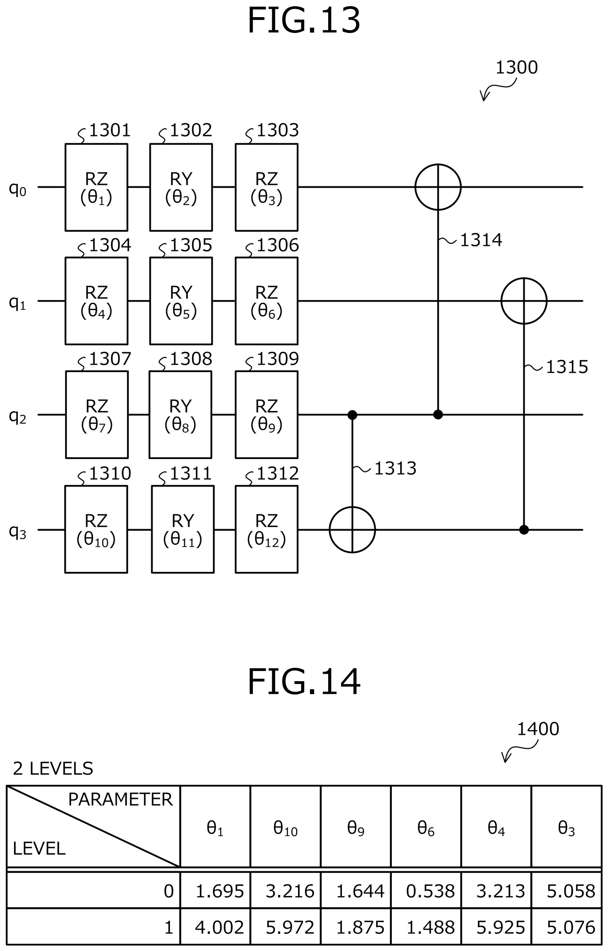

Next, a specific example of the operation of the information processing device 100 will be described with reference to Figs. 13 to 19.

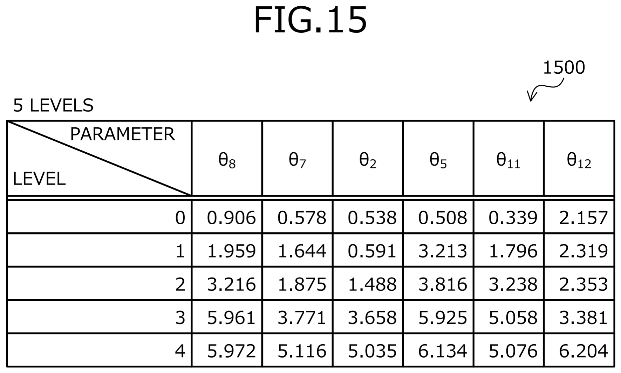

Figs. 13, 14, 15, 16, 17A, 17B, 18, and 19 are explanatory diagrams depicting a specific example of the operation of the information processing device 100. In Fig. 13, it is assumed that the information processing device 100 executes a VQE calculation to solve a specified problem related to H₂ molecules. In this case, the VQE calculation utilizes a variational quantum circuit 1300. The variational quantum circuit 1300 includes, for example, rotation gates 1301 to 1312. The variational quantum circuit 1300 includes controlled NOT gates 1313 to 1315. The parameters of the variational quantum circuit 1300 are θ₁ to θ₁₂ for the rotation gates 1301 to 1312, respectively. θ₁ to θ₁₂ indicate rotation angles. Therefore, the number of parameters is 12. The information processing device 100 then starts the VQE calculation. Here, description is given with reference to Figs. 14 and 15.

In Figs. 14 and 15, the information processing device 100 sets the parameters θ₁ to θ₁₂ as parameters to be updated and executes one optimization calculation using the quantum computing device 201. The information processing device 100 executes the optimization calculation, for example, to update the values of the parameters θ₁ to θ₁₂ set as parameters to be updated, and calculates the energy contribution ratio ΔE/Δθₖ. The information processing device 100 determines the number of levels for the parameters θ₁ to θ₁₂ so that the number of levels increases as the absolute value |ΔE/Δθₖ| of the energy contribution rate increases. The number of levels is the number of level values that may be set as the value of the parameter θₖ.

In the examples depicted in Figs. 14 and 15, the information processing device 100 determines the number of levels to be five for the top six parameters θ₂, θ₅, θ₇, θ₈, θ₁₁, and θ₁₂ in descending order of the absolute value |ΔE/Δθₖ| of the energy contribution rate. As depicted in a level table 1400, the information processing device 100 determines five level values for each of the top six parameters θ₂, θ₅, θ₇, θ₈, θ₁₁, and θ₁₂. The leftmost column of the level table 1400 indicates the index of the level value. The information processing device 100 determines a random value within the range [0,2π] for the level value corresponding to the parameter θₖ, for example, as depicted in the level table 1400.

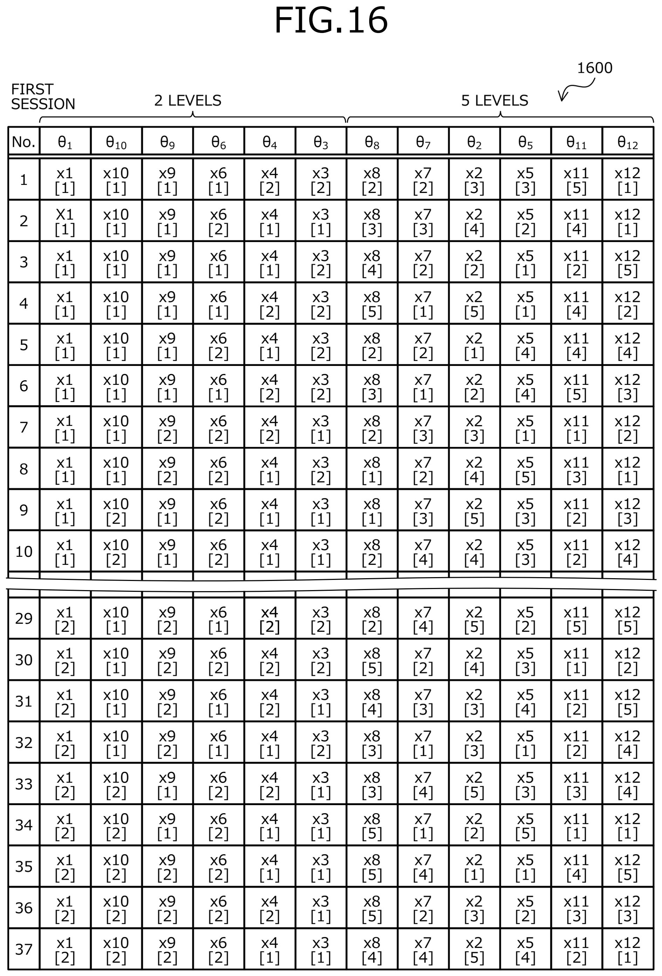

In the examples depicted in Figs. 14 and 15, the information processing device 100 determines the number of levels to be two for the bottom six parameters θ₁, θ₃, θ₄, θ₆, θ₉, and θ₁₀ in descending order of the absolute value |ΔE/Δθₖ| of the energy contribution rate. The information processing device 100 determines two level values for each of the bottom six parameters θ₁, θ₃, θ₄, θ₆, θ₉, and θ₁₀, as depicted in a level table 1500. The leftmost column of the level table 1500 indicates the index of the level value. The information processing device 100 determines a random value within the range [0,2π] for the level value corresponding to the parameter θₖ, for example, as depicted in the level table 1500. Here, description is given with reference to Fig. 16.

In Fig. 16, the information processing device 100 obtains an orthogonal array 1600 of six parameters with five levels and six parameters with two levels. The orthogonal array 1600 depicts patterns representing combinations of level values to be set as values for the parameters θ₁ to θ₁₂. The leftmost column of the orthogonal array 1600 indicates the pattern index. In the orthogonal array 1600, xk[i] indicates that the i-th level value is set for the k-th parameter θₖ. In the orthogonal array 1600, k is 1, 2, ..., 12. In the orthogonal array 1600, for the top six parameters θ₂, θ₅, θ₇, θ₈, θ₁₁, and θ₁₂, i is 1, 2, ..., 5. In the orthogonal array 1600, i is 1 or 2 for the bottom six parameters θ₁, θ₃, θ₄, θ₆, θ₉, and θ₁₀.

The information processing device 100 identifies 36 patterns representing combinations of the values of the parameters θ₁ to θ₁₂ based on the level tables 1400 and 1500 and the orthogonal array 1600. This allows the information processing device 100 to identify which patterns representing combinations of the values of the parameters θ₁ to θ₁₂ are preferably tested for energy calculation using a predetermined cost function f.

The information processing device 100 uses the quantum computing device 201 to execute quantum computation using a predetermined cost function f for each of the identified 36 patterns, and calculates energy E. Based on the calculated energy, the information processing device 100 generates a regression model E=Σₖ₌₁¹²aₖθₖ including dependent variables corresponding to the energy, explanatory variables obtained by normalizing the parameters θ₁ to θ₁₂, and coefficients applied to the explanatory variables. The information processing device 100 selects the top six parameters θₖ in descending order of the absolute value of aₖ and sets the six parameters θₖ as a parameter group θₛ₀.

Here, it is assumed that the information processing device 100 selects parameters θ₈, θ₇, θ₂, θ₅, θ₁₁, and θ₁₂. The information processing device 100 sets only the selected parameter group θₛ₀ as parameters whose values are to be updated. In this manner, the information processing device 100 may execute the first of a series of processes of determining the number of levels, identifying two or more patterns, selecting a parameter group θₛ₀, and setting parameters to be updated. In the following description, this series of processes may be referred to as "parameter review processes." p denotes the number of the parameter review processes.

After resetting the parameters to be updated, the information processing device 100 uses the quantum computing device 201 to execute a maximum of 15 optimization calculations until a predetermined convergence condition is met. The information processing device 100 completes the VQE calculation when the predetermined convergence condition is met. The predetermined convergence condition is, for example, that the magnitude of the gradient vector of the cost function f is equal to or less than a threshold value of 1×10⁻⁸.

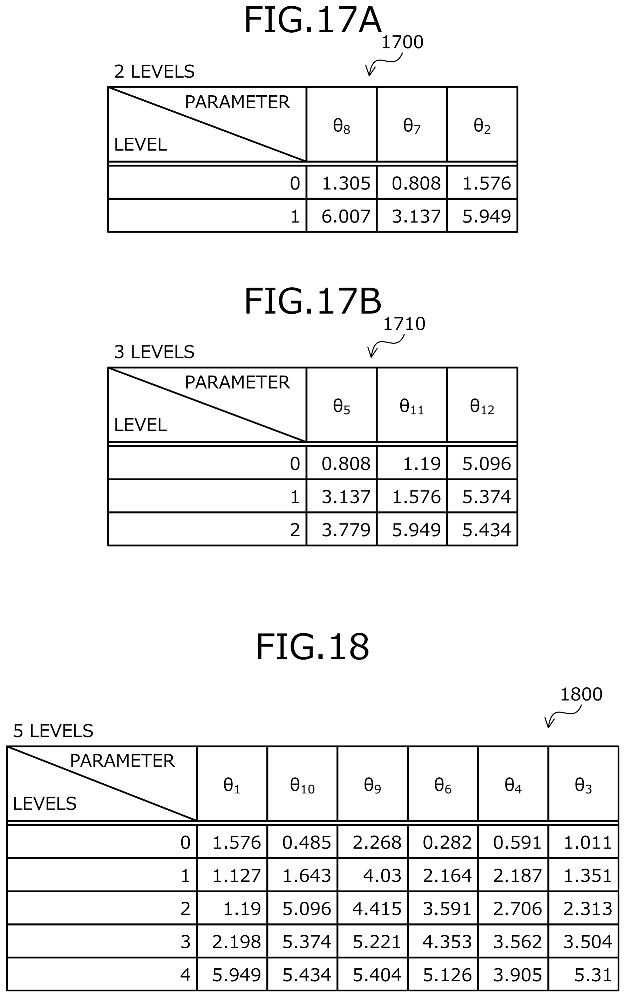

When the number of times the optimization calculation has been executed without satisfying the predetermined convergence condition reaches the number of reviews, the information processing device 100 temporarily suspends the VQE calculation. The number of reviews is, for example, 15x+1, where x is a positive integer. Since the number of reviews has reached the number of reviews, the information processing device 100 will reconsider the parameters to be updated. Here, the information processing device 100 sets the parameters θ₁, θ₁₀, θ₉, θ₆, θ₄, and θ₃ other than the parameter group θₛ₀ to the parameter group θₛ₀'. Here, description is given with reference to Figs. 17A, 18B, and 18.

In Figs. 17A, 17B, and 18, the information processing device 100 sets the parameters θ₁ to θ₁₂ as parameters to be updated and executes one optimization calculation using the quantum computing device 201. The information processing device 100 executes an optimization calculation to update the values of the parameters θ₁ to θ₁₂ set as parameters to be updated, for example, and calculates the energy contribution rate ΔE/Δθₖ.

The information processing device 100 determines the number of levels of the parameters θ₁ to θ₁₂ so that the number of levels of the parameters θ₁, θ₁₀, θ₉, θ₆, θ₄, and θ₃ in the parameter group θₛ₀' is greater than the number of levels of the parameters θ₈, θ₇, θ₂, θ₅, θ₁₁, and θ₁₂ in the parameter group θₛ₀. In this case, the information processing device 100 determines the number of levels for the parameters θ₃, θ₇, θ₂, θ₅, θ₁₁, and θ₁₂ so that the number of levels increases as the absolute value |ΔE/Δθₖ| of the energy contribution rate in the parameter group θₛ₀ increases.

In the examples depicted in Figs. 17A, 17B, and 18, the information processing device 100 determines the number of levels to be two for the bottom three parameters θ₂, θ₇, and θ₃ in the parameter group θₛ₀ in descending order of the absolute value |ΔE/Δθₖ| of the energy contribution rate. As depicted in a level table 1700, the information processing device 100 determines two level values for each of the bottom three parameters θ₂, θ₇, and θ₈. The leftmost column of the level table 1700 indicates the index of the level value. The information processing device 100 determines a random value within the range [0,2π] for the level value corresponding to the parameter θₖ, for example, as depicted in the level table 1700.

Furthermore, the information processing device 100 determines the number of levels to be three for the top three parameters θ₅, θ₁₁, and θ₁₂ in the parameter group θₛ₀ in descending order of the absolute value |ΔE/Δθₖ| of the energy contribution rate. The information processing device 100 determines three level values for each of the top three parameters θ₅, θ₁₁, and θ₁₂, as depicted in a level table 1710. The leftmost column of the level table 1710 indicates the index of the level value. The information processing device 100 determines a random value within the range [0,2π] for the level value corresponding to the parameter θₖ, for example, as depicted in the level table 1710.

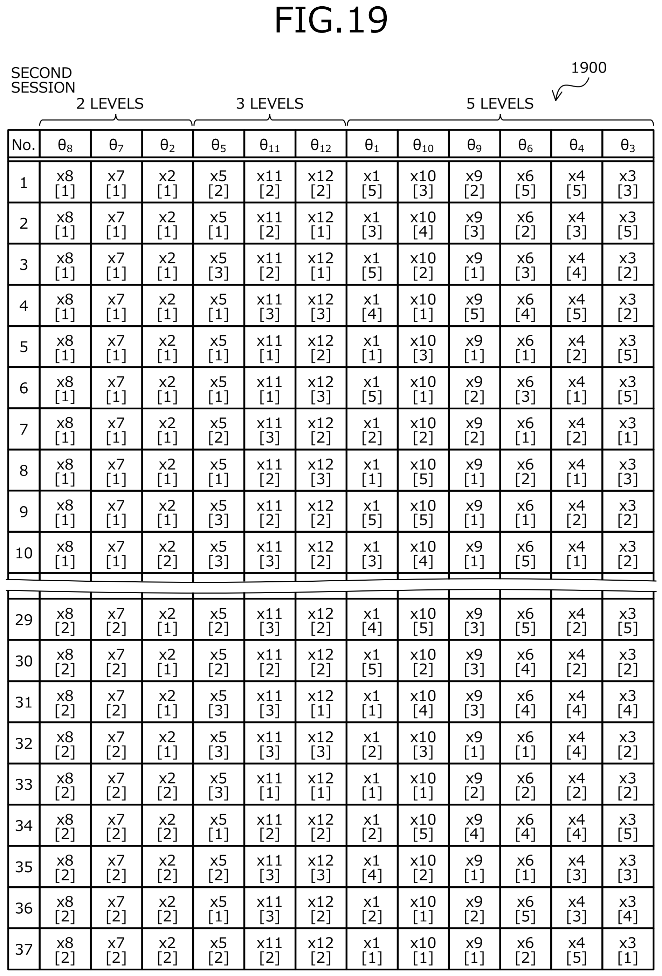

In the examples depicted in Figs. 17A, 17B, and 18, the information processing device 100 determines the number of levels for the parameters θ₁, θ₁₀, θ₉, θ₆, θ₄, and θ₃ of the parameter group θₛ₀' to five, which is greater than the number of levels for the parameters θ₈, θ₇, θ₂, θ₅, θ₁₁, and θ₁₂. As depicted in a level table 1800, the information processing device 100 determines five level values for each of the parameters θ₁, θ₁₀, θ₉, θ₆, θ₄, and θ₃. The leftmost column of the level table 1800 indicates the index of the level value. For example, as depicted in the level table 1800, the information processing device 100 determines a random value within the range [0,2π] as the level value corresponding to the parameter θₖ. Here, description is given with reference to Fig. 19.

In Fig. 19, the information processing device 100 obtains an orthogonal array 1900 of six parameters with five levels, three parameters with three levels, and three parameters with two levels. The orthogonal array 1900 depicts patterns representing combinations of level values of parameters θ₁ to θ₁₂. The leftmost column of the orthogonal array 1900 indicates pattern indexes. In the orthogonal array 1900, xk[i] indicates that the i-th level value is set for the k-th parameter θₖ. In the orthogonal array 1900, k is 1, 2, ..., 12. In the orthogonal array 1900, for six parameters θ₁, θ₁₀, θ₉, θ₆, θ₄, and θ₃ with five levels, i is 1, 2, ..., 5. In the orthogonal array 1900, for three parameters θ₅, θ11, and θ₁₂ with three levels, i is 1, 2, and 3. In the orthogonal array 1900, for three parameters θ₂, θ₇, and θ₈ each having two levels, i is 1 or 2.

The information processing device 100 identifies 36 patterns representing combinations of the values of the parameters θ₁ to θ₁₂ based on the level tables 1700, 1710, and 1800 and the orthogonal array 1900. This allows the information processing device 100 to identify which patterns representing combinations of the values of the parameters θ₁ to θ₁₂ are preferably tested for energy calculation using a predetermined cost function f.

The information processing device 100 uses the quantum computing device 201 to execute quantum computation using a predetermined cost function f for each of the identified 36 patterns, and calculates energy E. Based on the calculated energy, the information processing device 100 generates a regression model E=Lₖ₌₁¹²aₖθₖ, which includes a dependent variables corresponding to the energy, explanatory variables obtained by normalizing the parameters θ₁ to θ₁₂, and coefficients applied to the explanatory variables. The information processing device 100 selects top six parameters θₖ in the descending order of the absolute values of aₖ and sets them as a parameter group θₛ₁. Here, it is assumed that the information processing device 100 selects parameters θ₈, θ₇, θ₂, θ₅, θ₁₁, and θ₆.

The information processing device 100 sets only the selected parameter group θₛ₁ as parameters whose values are to be updated. As described, the information processing device 100 may execute a second parameter review process. After resetting the parameters to be updated, the information processing device 100 uses the quantum computing device 201 to execute up to 15 optimization calculations until a predetermined convergence condition is met. When the predetermined convergence condition is met, the information processing device 100 completes the VQE calculation. The predetermined convergence condition is, for example, that the magnitude of the gradient vector of the cost function f is equal to or less than a threshold value of 1×10⁻⁸.

When the information processing device 100 executes 15 optimization calculations without satisfying the predetermined convergence condition, the information processing device 100 repeats the operation of "executing a parameter review process and executing up to 15 optimization calculations until the predetermined convergence condition is satisfied," as depicted in Figs. 17 to 19.

Here, the information processing device 100 completes the VQE calculation because the predetermined convergence condition is satisfied when the information processing device 100 executes a total of 21 optimization calculations. Upon completing the VQE calculation, the information processing device 100 outputs the total energy value E=-1.13615 and the combination of the most recently updated values of the parameters θ₁ to θ₁₂ as the results of the VQE calculation. This allows the information processing device 100 to make the solution to the specified problem externally accessible.

As described, the information processing device 100 may limit the parameters whose values are to be updated in order to reduce the processing time necessary for executing the VQE calculation. In this case, the information processing device 100 may individually adjust the number of levels for each parameter. In order to maintain the accuracy of the VQE calculation, the information processing device 100 may efficiently test combinations of parameter values for two or more parameters based on the adjusted number of levels according to an experimental design. This allows the information processing device 100 to accurately select parameters useful in the VQE calculation. This allows the information processing device 100 to reduce the processing time necessary to execute the VQE calculation while maintaining the accuracy of the VQE calculation.

While a case is described in which the information processing device 100 determines the number of levels for each parameter θₖ using different criteria in the first parameter review process and the second and subsequent parameter review processes, this is not a limitation. For example, the information processing device 100 may determine the number of levels for each parameter θₖ using the same criteria in the first parameter review process and the second and subsequent parameter review processes. For example, the information processing device 100 may determine the number of levels of the parameters θ₁ to θ₁₂ in each round of the parameter review process so that the larger the absolute value |ΔE/Δθₖ| of the energy contribution rate, the greater the number of levels.

Here, while a case has been described in which the information processing device 100 sets the same parameters θ₁ to θ₁₂ as the parameters to be updated for determining the number of levels in each round of the parameter review process, this is not a limitation. For example, the information processing device 100 may set different parameters as the parameters to be updated, for determining the number of levels in each round of the parameter review process. For example, the information processing device 100 may set a parameter other than the previous parameter to be updated as the current parameter to be updated in each round of the parameter review process and may determine the number of levels of the current parameter to be updated. In this case, for example, the information processing device 100 may add to the previous parameter to be updated, a useful parameter determined based on the determined number of levels among the current parameters to be updated, and set the next parameter to be updated.

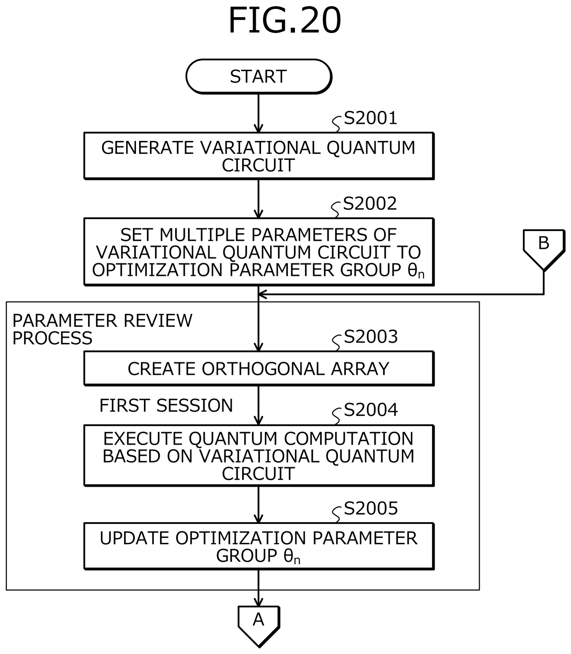

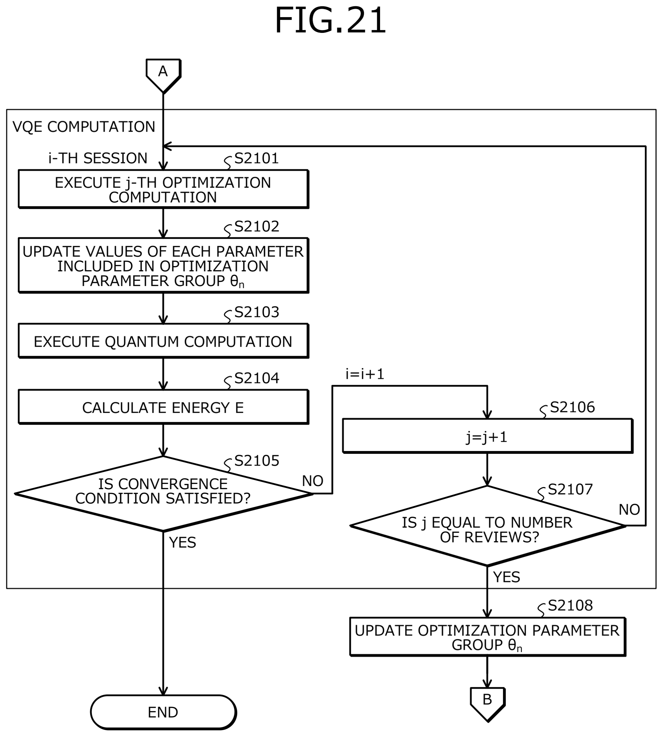

Next, an example of an overall processing procedure executed by the information processing device 100 will be described with reference to Figs. 20 and 21. The overall processing is implemented, for example, by the CPU 301 storage areas such as the memory 302 and the recording medium 305, and the network I/F 303 depicted in Fig. 3.

Figs. 20 and 21 are flowcharts depicting an example of the overall processing procedure. In Fig. 20, the information processing device 100 generates a variational quantum circuit (step S2101). Then, the information processing device 100 sets multiple parameters of the variational quantum circuit to an optimization parameter group θₙ (step S2002).

Next, the information processing device 100 creates an orthogonal array so that the number of level values set as the value of each parameter included in the optimization parameter group θₙ differs (step S2003). Then, the information processing device 100 uses the quantum computing device 201 to refer to the created orthogonal array and execute quantum computation based on the variational quantum circuit (step S2004).

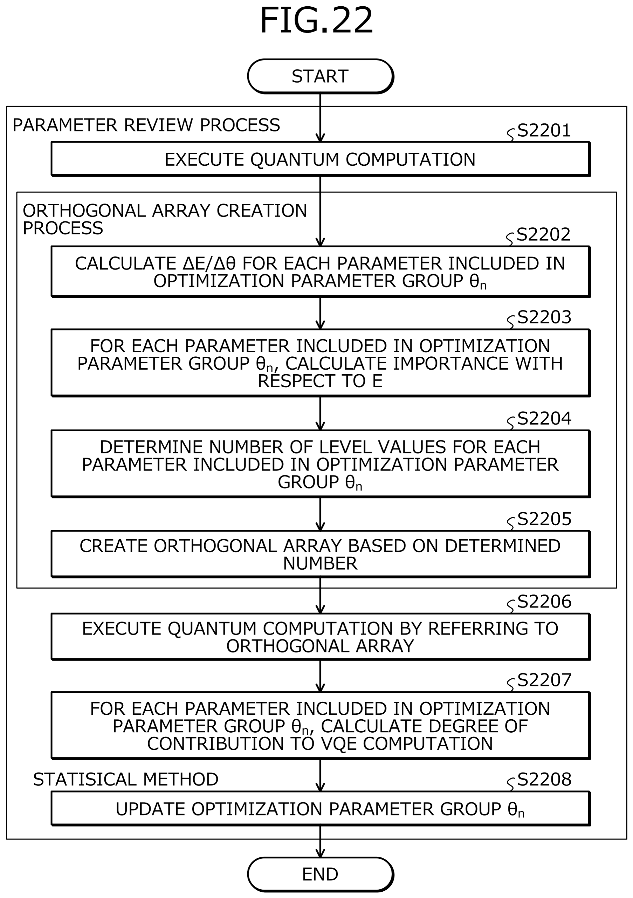

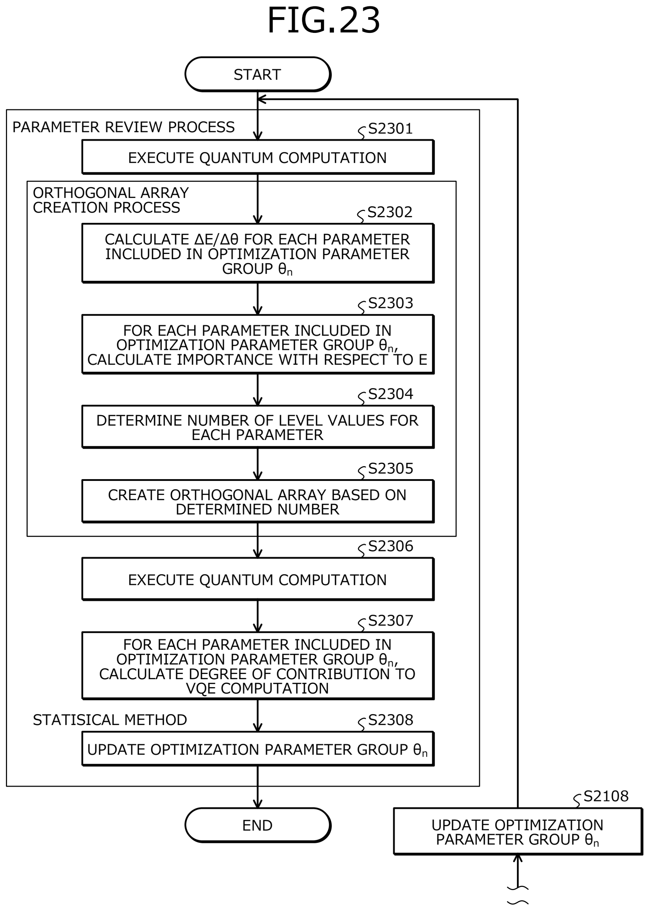

Next, the information processing device 100 selects parameters to remain in the optimization parameter group θₙ and parameters to be deleted from the optimization parameter group θₙ based on the results of the quantum computation, and updates the optimization parameter group θₙ (step S2005). Here, for example, the parameter review process depicted at steps S2003 to S2005 is implemented by the first review process depicted in Fig. 22 or the second review process depicted in Fig. 23. For example, the first parameter review process is implemented by the first review process depicted in Fig. 22. Also, for example, the second and subsequent parameter review processes are implemented by the second review process depicted in Fig. 23. Then, the information processing device 100 proceeds to the process at step S2101 depicted in Fig. 21.

In Fig. 21, the information processing device 100 executes the j-th optimization computation using the quantum computing device 201 (step S2101). The information processing device 100 then updates the values of each parameter included in the optimization parameter group θₙ based on the results of the optimization calculation (step S2102).

Next, the information processing device 100 executes quantum computation using the quantum computing device 201 (step S2103). Then, the information processing device 100 calculates energy E based on the results of the quantum computation (step S2104).

Next, the information processing device 100 determines whether the convergence condition is satisfied (step S2105). When the convergence condition is satisfied (step S2105: YES), the information processing device 100 terminates the overall processing. On the other hand, when the convergence condition is not satisfied (step S2105: NO), the information processing device 100 proceeds to the process at step S2106.

At step S2106, the information processing device 100 sets j=j+1 (step S2106). Next, the information processing device 100 determines whether j is the number of reviews (step S2107). Here, when j is the number of reviews (step S2107: YES), the information processing device 100 proceeds to the process at step S2108. On the other hand, when j is not the number of reviews (step S2107: NO), the information processing device 100 returns to the process at step S2101.

At step S2108, the information processing device 100 updates the optimization parameter group θₙ so that the parameters deleted from the optimization parameter group θₙ are temporarily returned to the optimization parameter group θₙ (step S2108). Then, the information processing device 100 returns to the process at step S2003 in Fig. 20. This allows the information processing device 100 to solve the optimization problem.

Next, an example of a procedure of the first review process executed by the information processing device 100 will be described with reference to Fig. 22. The first review process corresponds to the first parameter review process. The first review process is implemented, for example, by the CPU 301, a storage area such as the memory 302 or the recording medium 305, and the network I/F 303 depicted in Fig. 3.

Fig. 22 is a flowchart depicting an example of the procedure of the first review process. In Fig. 22, the information processing device 100 executes quantum computation using the quantum computing device 201 (step S2201). Then, the information processing device 100 calculates ΔE/Δθ for each parameter included in the optimization parameter group θₙ (step S2202).

Next, the information processing device 100 calculates the importance with respect to E of each parameter included in the optimization parameter group θₙ based on the calculated ΔE/Δθ (step S2203). The information processing device 100 then determines the number of level values for each parameter included in the optimization parameter group θₙ based on the calculated importance (step S2204).

Next, the information processing device 100 creates an orthogonal array based on the determined number (step S2205). The information processing device 100 then executes quantum computation using the quantum computing device 201, referencing the orthogonal array (step S2206).

Next, the information processing device 100 calculates for each parameter included in the optimization parameter group θₙ, the degree of contribution thereof to the VQE computation, based on the results of the quantum computation (step S2207).

Next, the information processing device 100 selects parameters to remain in the optimization parameter group θₙ and parameters to delete from the optimization parameter group θₙ based on the calculated contributions, and updates the optimization parameter group θₙ (step S2208). The information processing device 100 then terminates the first review process.

Next, an example of a procedure of the second review process executed by the information processing device 100 will be described with reference to Fig. 23. The second review process corresponds to the second or subsequent parameter review process. The second review process is implemented, for example, by the CPU 301, a storage area such as the memory 302 or the recording medium 305, and the network I/F 303 depicted in Fig. 3.

Fig. 23 is a flowchart depicting an example of the procedure of the second review process. In Fig. 23, the information processing device 100 executes quantum computation using the quantum computing device 201 (step S2301). Then, the information processing device 100 calculates ΔE/Δθ for each parameter included in the optimization parameter group θₙ (step S2302).

Next, the information processing device 100 calculates the importance of each parameter included in the optimization parameter group θₙ with respect to E based on the calculated ΔE/Δθ (step S2303). Based on the calculated importance, the information processing device 100 distinguishes between parameters that were retained in the optimization parameter group θₙ and parameters that were deleted in the previous calculation, and determines the number of level values for each parameter (step S2304).

Next, the information processing device 100 creates an orthogonal array based on the determined number (step S2305). The information processing device 100 then executes quantum computation by referring to the orthogonal array, using the quantum computing device 201 (step S2306).

Next, the information processing device 100 calculates for each parameter included in the optimization parameter group θₙ, the degree of contribution thereof to the VQE computation based on the results of the quantum computation (step S2307).

Based on the calculated contributions, the information processing device 100 selects parameters to be retained in the optimization parameter group θₙ and parameters to be deleted from the optimization parameter group θₙ, and updates the optimization parameter group θₙ (step S2308). The information processing device 100 then terminates the second review process.

As described above, the information processing device 100 may execute a predetermined number of iterations according to the VQE. In this process, the information processing device 100 may obtain for each of one or more first parameters among multiple parameters, the first degree of contribution thereof to the amount of change in energy corresponding to a quantum state represented by the variational quantum circuit. The information processing device 100 may determine, for each first parameter, the number of level values that may be set as the value of that first parameter based on the obtained first degree of contribution. The information processing device 100 may identify two or more patterns each representing a combination of level values to be set as the value of each first parameter. The information processing device 100 may calculate for each first parameter, the second degree of contribution thereof to the VQE based on the calculation results of the energy corresponding to the quantum state represented by the variational quantum circuit, for each of the identified two or more patterns. The information processing device 100 may set, as a parameter to be updated, one or more second parameters among the one or more first parameters whose calculated second degree of contributions are determined to be relatively high based on the calculated second degree of contributions. This allows the information processing device 100 to appropriately adjust the parameters to be updated, thereby reducing the processing time necessary to execute the VQE calculation while maintaining the accuracy of the VQE calculation.

According to the information processing device 100, when the first iteration is executed, each of the multiple parameters may be set as a parameter to be updated. This allows the information processing device 100 to execute the first iteration.

According to the information processing device 100, iterations may be executed a first number of times according to VQE. At this time, the information processing device 100 may set each of the multiple parameters as a first parameter. The information processing device 100 may obtain the first degree of contribution of each first parameter. The information processing device 100 may determine the number of level values that may be set as the value of each first parameter so that the larger the first degree of contribution, the greater the number of level values that may be set as the value of the first parameter. This allows the information processing device 100 to appropriately adjust the number of level values.

The information processing device 100 may execute a second number of iterations according to VQE. At this time, the information processing device 100 may set each of the multiple parameters as a first parameter. The information processing device 100 may obtain a first degree of contribution of each first parameter. The information processing device 100 may determine the number of level values that may be set as the value of each first parameter such that the number of level values that may be set as the value of a first parameter that is to be updated is less than the number of level values that may be set as the value of a first parameter that is not to be updated. This allows the information processing device 100 to appropriately adjust the number of level values.

The information processing device 100 may execute the iteration a second number of times. The information processing device 100 may set each of the multiple parameters, other than the parameter to be updated, as a first parameter. The information processing device 100 may obtain a first degree of contribution of each first parameter. The information processing device 100 may determine the number of level values that may be set as the value of each first parameter such that the greater the first degree of contribution, the greater the number of level values that may be set as the value of the first parameter. This allows the information processing device 100 to appropriately adjust the number of level values.

The information processing device 100 may set a parameter other than the parameter to be updated among multiple parameters as the first parameter. The information processing device 100 may obtain the first degree of contribution of each first parameter. The information processing device 100 may determine the number of level values that may be set as the value of each first parameter such that the greater the first degree of contribution, the greater the number of level values that may be set as the value of the first parameter. This allows the information processing device 100 to appropriately adjust the number of level values.

The information processing device 100 may remove, from the parameters to be updated, one or more third parameters that are set as the parameter to be updated and whose calculated second degree of contribution is determined to be relatively low among one or more first parameters. This allows the information processing device 100 to appropriately adjust the parameters to be updated, thereby reducing the processing time necessary to execute the VQE calculation while maintaining the accuracy of the VQE calculation.

The information processing device 100 may repeatedly execute iterations using a computing unit configured to execute a variational quantum circuit according to VQE. This allows the information processing device 100 to complete the VQE calculation and solve the optimization problem.

The information processing device 100 may set multiple predetermined counts. This allows the information processing device 100 to review the parameters to be updated multiple times, thereby reducing the processing time necessary to execute the VQE calculation while maintaining the accuracy of the VQE calculation.

The information processing device 100 may obtain a first degree of contribution corresponding to the ratio of the change in energy corresponding to the quantum state represented by the variational quantum circuit, to the change in the first parameter. This allows the information processing device 100 to use the first degree of contribution, which accurately evaluates the degree of contribution to the change in energy.

The information processing device 100 may obtain calculation results of energy corresponding to a quantum state represented by a variational quantum circuit for each of two or more patterns. The information processing device 100 may calculate a second degree of contribution for a first parameter based on the calculation results from a correlation coefficient between a dependent variable corresponding to the energy and an explanatory variable corresponding to each first parameter. This allows the information processing device 100 to accurately calculate the second degree of contribution.

The information processing device 100 may obtain calculation results of energy corresponding to a quantum state represented by a variational quantum circuit for each of two or more patterns. The information processing device 100 may identify a regression model including a dependent variable corresponding to the energy, explanatory variables corresponding to each first parameter, and coefficients multiplied by the explanatory variables based on the calculation results. The information processing device 100 may calculate a second degree of contribution for the first parameter from the coefficients in the regression model. This allows the information processing device 100 to accurately calculate the second degree of contribution.

The information processing method described in the embodiments may be implemented by executing a prepared program on a computer such as a personal computer and a workstation. The program is stored on a non-transitory, computer-readable recording medium such as a hard disk, a flexible disk, a compact disc read-only memory (CD-ROM), a magneto-optical (MO) disc, and a digital versatile disc (DVD), read out from the computer-readable medium, and executed by the computer. The program may be distributed through a network such as the Internet.

According to one aspect, it becomes possible to reduce the processing time necessary to execute a VQE calculation.

All examples and conditional language provided herein are intended for pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

## Claims

1. An information processing program for causing a computer to execute a process, the process comprising:
when a predetermined number of iterations of updating set parameters to be updated among a plurality of parameters defining a variational quantum circuit are executed according to a variational quantum eigensolver method, and each of one or more first parameters among the plurality of parameters has a first degree of contribution to an amount of change in energy corresponding to a quantum state represented by the variational quantum circuit,
determining for the each of the one or more first parameters based on the first degree of contribution thereof, a number of level values settable as a value of the each of the one or more first parameters;
calculating for the each of the one or more first parameters, a second degree of contribution thereof to the variational quantum eigensolver method, the second degree of contribution being calculated based on a result of calculation of the energy corresponding to the quantum state represented by the variational quantum circuit, in each of two or more patterns each representing a combination of level values to be set as the value of the each of the one or more first parameters values when setting one of the level values of the number determined for the each of the one or more first parameters; and
setting, as the parameters to be updated, each of one or more second parameters among the one or more first parameters whose calculated second degree of contribution is determined to be relatively high based on the calculated second degree of contribution.

2. The information processing program according to claim 1, wherein
when the predetermined number of iterations is executed a first time, the parameters to be updated are each of the plurality of parameters.

3. The information processing program according to claim 2, wherein
when the predetermined number of iterations to be executed is a first number, the determining includes determining the number of level values based on the first degree of contribution of the each of the plurality of parameters as the one or more first parameters, so that the number of level values is greater, a greater is the first degree of contribution.

4. The information processing program according to claim 3, wherein
when the predetermined number of iterations to be executed is a second number that is greater than the first number, with the each of the plurality of parameters as the one or more first parameters, the one or more first parameters includes the parameters to be updated and other parameters excluding the parameters to be updated, and the determining includes determining the number of level values based on the first degree of contribution of the each of the one or more first parameters, so that the number of level values settable as the value of any of the parameters to be updated of the one or more first parameters is less than the number of level values settable as the value of any of the other parameters of the one or more first parameters.

5. The information processing program according to claim 3, wherein
when the predetermined number of iterations to be executed is a second number that is greater than the first number, with parameters other than the parameters to be updated as the one or more first parameters among the plurality of parameters, the determining includes determining, the number of level values settable as the value of the each of the one or more first parameters, based on the first degree of contribution of the each of the one or more first parameters, so that the number of level values is greater, the greater is the first degree of contribution.

6. The information processing program according to claim 2, wherein
with parameters other than the parameters to be updated as the one or more first parameters among the plurality of parameters, the determining includes determining the number of level values settable as the value of the each of the one or more first parameters, based on the first degree of contribution of the each of the one or more first parameters, so that the number of level values settable as the value of the each of the one or more first parameters is greater, a greater is the first degree of contribution.

7. The information processing program according to any one of claims 1 to 6, wherein
the setting includes removing, from among the parameters to be updated, one or more third parameters that are set as the parameters to be updated and whose calculated second degree of contribution is determined to be relatively low among the one or more first parameters, based on the calculated second degree of contribution.

8. The information processing program according to any one of claims 1 to 7, the process further comprising:
executing the predetermined number of iterations using a computing unit configured to execute the variational quantum circuit according to the variational quantum eigensolver method.

9. The information processing program according to any one of claims 1 to 8, wherein
the predetermined number of iterations is one of a plurality of predetermined numbers of iterations.

10. The information processing program according to any one of claims 1 to 9, wherein
the first degree of contribution corresponds to a ratio of an amount of change in energy corresponding to the quantum state represented by the variational quantum circuit, to an amount of change in each of the one or more first parameters.

11. The information processing program according to any one of claims 1 to 10, wherein
the calculating includes calculating the second degree of contribution related to the each of the one or more first parameters from a correlation coefficient between a dependent variable corresponding to the energy and an explanatory variable corresponding to the each of the one or more first parameters.

12. The information processing program according to any one of claims 1 to 10, wherein
the calculating includes calculating the second degree of contribution related to the each of the one or more first parameters from a coefficient of an explanatory variable corresponding to the each of the one or more first parameters in a regression model including a dependent variable corresponding to the energy, the explanatory variable, and the coefficient.

13. An information processing method executed by a computer, the method comprising:
when a predetermined number of iterations of updating set parameters to be updated among a plurality of parameters defining a variational quantum circuit are executed according to a variational quantum eigensolver method, and each of one or more first parameters among the plurality of parameters has a first degree of contribution to an amount of change in energy corresponding to a quantum state represented by the variational quantum circuit,
determining for the each of the one or more first parameters based on the first degree of contribution thereof, a number of level values settable as a value of the each of the one or more first parameters;
calculating for the each of the one or more first parameters, a second degree of contribution thereof to the variational quantum eigensolver method, the second degree of contribution being calculated based on a result of calculation of the energy corresponding to the quantum state represented by the variational quantum circuit, in each of two or more patterns each representing a combination of level values to be set as the value of the each of the one or more first parameters values when setting one of the level values of the number determined for the each of the one or more first parameters; and
setting, as the parameters to be updated, each of one or more second parameters among the one or more first parameters whose calculated second degree of contribution is determined to be relatively high based on the calculated second degree of contribution.

14. An information processing device, comprising:
a memory;
a processor coupled to the memory, the processor configured to:
when a predetermined number of iterations of updating set parameters to be updated among a plurality of parameters defining a variational quantum circuit are executed according to a variational quantum eigensolver method, and each of one or more first parameters among the plurality of parameters has a first degree of contribution to an amount of change in energy corresponding to a quantum state represented by the variational quantum circuit,
determine for the each of the one or more first parameters based on the first degree of contribution thereof, a number of level values settable as a value of the each of the one or more first parameters;
calculate for the each of the one or more first parameters, a second degree of contribution thereof to the variational quantum eigensolver method, the second degree of contribution being calculated based on a result of calculation of the energy corresponding to the quantum state represented by the variational quantum circuit, in each of two or more patterns each representing a combination of level values to be set as the value of the each of the one or more first parameters values when setting one of the level values of the number determined for the each of the one or more first parameters; and
set, as the parameters to be updated, each of one or more second parameters among the one or more first parameters whose calculated second degree of contribution is determined to be relatively high based on the calculated second degree of contribution.
